Europäisches Patentamt

European Patent Office

Office européen des brevets

(19)

(11) **EP 1 288 831 A1**

(12) **EUROPEAN PATENT APPLICATION**

(43) Date of publication:
05.03.2003 Bulletin 2003/10

(51) Int Cl.$^7$: **G06F 17/60**

(21) Application number: **02255802.7**

(22) Date of filing: **20.08.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(30) Priority: **31.08.2001 US 944739**<br>**12.10.2001 US 976637**<br>**15.03.2002 US 98261**<br><br>(71) Applicant: **Hewlett-Packard Company**<br>**Palo Alto, CA 94304 (US)** | (72) Inventors:<br>• **Vora, Poorvi L.**<br>**Corvallis, OR 97333 (US)**<br>• **Knapp, Verna E.**<br>**Monmouth, OR 97361 (US)**<br><br>(74) Representative: **Jackson, Richard Eric et al**<br>**Carpmaels & Ransford,**<br>**43 Bloomsbury Square**<br>**London WC1A 2RA (GB)** |

(54) **Anonymous recommendation technique with variable degrees of privacy and accuracy**

(57) A commerce system (202) comprises a plurality of entities each having an associated entity identity that is stored as a plurality of secret shares among at least a first portion of a plurality of shareholders. A method for estimating activities of a first entity of the plurality of entities (212) for use in the commerce system is disclosed. The method includes associating, for each entity (212) of the plurality of secret shares used to store the entity's (212) identity. The method also includes associating, for each entity (212) of the plurality of entities, at least one tag with at least one activity for each tag-holding share, wherein the at least one tag is based at least in part upon information associated with the entity. The method further includes generating, for the first entity, an estimated activities list comprising common activities, each of the common activities being associated with each secret share of a plurality of secret shares used to store the first entity's identity, and with at least one first tag if the share is tag-holding, wherein the at least one first tag is based at least in part upon information associated with the first entity.

FIG.2

## Description

CROSS-REFERENCE TO RELATED APPLICATIONS

This application is a continuation-in-part of prior U.S. Patent Application Serial No. 09/976637, filed October 12, 2001, which is a continuation-in-part of prior U.S. Patent Application Serial No. 09/944739, filed August 31, 2001. This application is also related to another U.S. Patent Application having Attorney Docket Number 10019034-1, entitled ANONYMOUS PROCESSING OF USAGE RIGHTS WITH VARIABLE DEGREES OF PRIVACY AND ACCURACY filed on this date herewith by Vora et al., the same inventors as in the present application.

FIELD OF THE INVENTION

The present invention relates generally to electronic commerce systems and, in particular, to a technique for providing anonymous recommendations with varying degrees of privacy versus accuracy within such electronic commerce systems.

BACKGROUND OF THE INVENTION

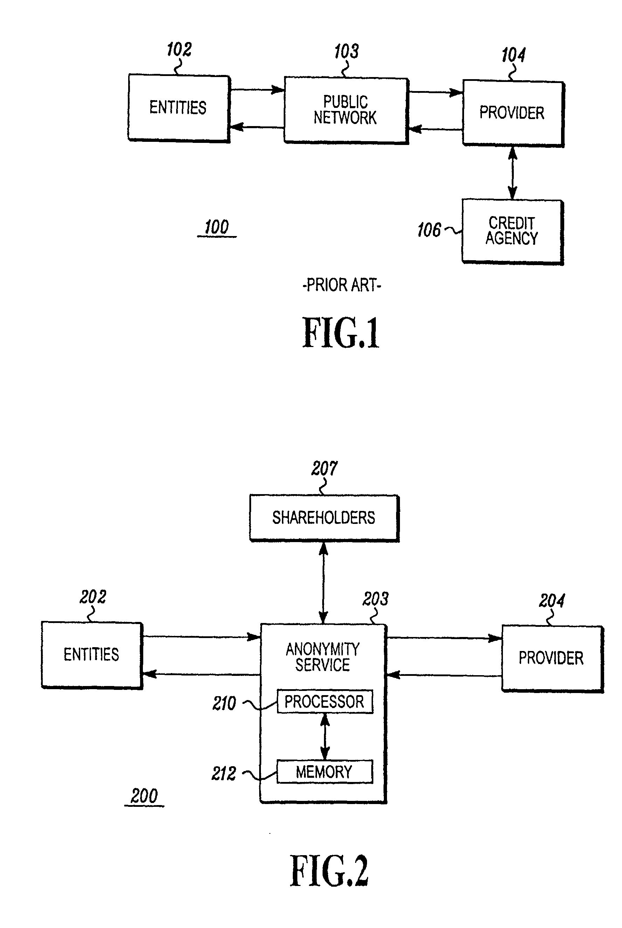

Electronic commerce is increasingly becoming a part of everyday life. In particular, the rapid growth of the Internet and World Wide Web has lead to a corresponding increase in the ability to acquire goods and services remotely. **A** generalized example in accordance with current techniques is illustrated in FIG. 1. In particular, an entity 102, such as an individual or organization, may communicate with a provider 104 via a public network 103. The entity 102 transmits a variety of information to the provider 104 in order to acquire a product being offered by the provider 104. The information sent by the entity 102 typically comprises an identification of the entity, an identification of the product being acquired and, optionally, information regarding the price of the product being acquired. In turn, where the acquisition is a purchase, the provider 104 may supply some or all of the information from the entity 102 to a credit agency 106. As a result, the provider 104 has specific knowledge of the products being purchased by the entity 102. Likewise, the credit agency 106 has specific knowledge that the entity 102 is purchasing products from the provider 104.

Based on the knowledge of what products or services are being acquired, the provider 104 can often supply one or more recommendations to the entity. That is, if an entity purchases, for example, tickets to a classical music concert, the provider may be able to recommend other classical music concerts or even other products, such as recordings of classical music. As providers become more familiar with additional specific activities performed by specific entities within the electronic commerce system (i.e., develop profiles about the entities), they can further refine their recommendations so as to provide more targeted or relevant recommendations with increased likelihood that the specific entities will follow up on the recommendations. While specific knowledge of a given entity's on-line activities may be valuable to the provider as a source of providing recommendations, which recommendation may even be helpful to or welcomed by some of the targeted entities, an increasing number of consumers object to commercial enterprises and other third parties having specific knowledge of their on-line activities. Clearly, a consumers desire for privacy conflicts with the desire of commercial enterprises'to be able to recommend additional services and products based on past activities by consumers.

Therefore, a need exists for techniques that allow the formulation Of recommendations based on some degree of knowledge about a given entity's on-line activities, but that also provides the given entity with a corresponding degree of privacy.

BRIEF DESCRIPTION OF THE DRAWINGS

FIG. 1 is a block diagram illustrating a typical arrangement used in electronic commerce in accordance with prior art techniques.
FIG. 2 is a block diagram illustrating an arrangement that may be used for electronic commerce in accordance with the present invention.
FIG. 3 is a flow chart illustrating a technique in accordance with a first embodiment of the present invention.
FIGS. 4-18 illustrate an example of providing an estimated activities list in accordance with the first embodiment of the present invention.
FIGS. 19-33 illustrate another example of providing an estimated activities list in accordance with the first embodiment of the present invention.
FIG. 34 is a flow chart illustrating a technique in accordance with a second embodiment of the present invention.
FIGS. 35-49 illustrate an example of providing an estimated activities list in accordance with the second embodiment of the present invention.

DETAILED DESCRIPTION OF THE PREFERRED EMBODIMENT

Embodiments of the present invention provide a technique for making recommendations to entities in an electronic commerce system (based, for example, on the Internet or World Wide Web) while simultaneously maintaining activities profiles of individual entities in secret. In general, the embodiments provide a technique where recommendation accuracy varies inversely relative to privacy, and vice versa. In the context of the embodiments of the present invention, activities encompass substantially all actions in which an entity provides its entity identification to a third party including, but not limited to, purchasing a digital object or service, providing information to a third party for the purposes, for example, of rating something in a survey, etc. Furthermore, electronic commerce systems as used herein are not limited to systems supporting commercial transactions, but instead encompass all systems whereby an entity at least provides its entity identification to a third party for any purpose.

Embodiments of the present invention employ secret sharing techniques whereby information regarding particular activities by an entity is kept confidential and yet accessible when required to generate recommendations for the entity's benefit. An entity engaging in an activity within the electronic commerce systems supplies data such as an entity identification to an anonymity service. In turn, the anonymity service splits the entity identification into a plurality of secret shares that are thereafter provided to a corresponding plurality of shareholders. The nature of the secret splitting process is such that each shareholder is unable to reproduce the secret corresponding to the shareholders share without the other shareholders involved in the process. Furthermore, the process whereby the secret shares are generated should be reproducible by the anonymity service, such that the anonymity service can generate all the sets of the plurality of secret shares ever generated for a particular entity identification. Information regarding the specific activity (e.g., information identifying the specific activity) is associated with each secret share of the plurality of secret shares used to memorialize the entity's identity. Assuming that there are a finite number of secret shares available from which any given entity's plurality of secret shares may be selected, over time and multiple activities #conducted by multiple entities, at least some secret shares will have associated therewith a set of activities corresponding to a plurality of entities.

Embodiments of the present invention require the categorization of each share of the plurality of secret shares defining the entity as a tag-holding or non-tag-holding share. It also provides for the use of tags that are based on information that is substantially uniquely associated with individual entities for tag-holding shares. In one embodiment of the present invention, tags are based, at least in part, upon at least a portion of a plurality of secret shares representative of each entitys identity. For example, a one-way hash function may be used to create tags based on the secret shares for a given entity. Thereafter, the tags are also associated with corresponding tag-holding secret shares and the information regarding the specific activities. Because the hash function is preferably non-reversible, shareholders in possession of a secret share and corresponding tag is not able, without substantial difficulty, to discern the identity of the entity corresponding thereto. Although collaborating shareholders could combine information regarding secret shares and tags in order to discern some information about a corresponding entity, the additional identification characteristics of the tag allow more accurate recommendations to be made. This is the tradeoff the present invention exploits; provide greater recommendation accuracy at the expense of lesser privacy. The performance characteristics of the hash function used determine the degree of privacy lost in exchange for greater recommendation accuracy. In one embodiment of the present invention all shares are tag-holding and this provides minimum privacy, but maximum accuracy.

When it is desired to generate recommendations for a given entity based on that entity's past activities, an intersection of the sets of activities associated with that entity's secret shares and corresponding tags for tag-holding shares is provided as an estimated activities list. That is, sets of activities that are associated with each secret share of the given entity's secret shares, and that are associated with tags corresponding to the tag-holding shares of the given entity are obtained. Activities common to each of these sets of activities are included in the estimated activities list, whereas activities found in less than all of the sets of activities are excluded. Thereafter, one or more recommendations may be made based on the estimated activities list. By associating activities with a plurality of secret shares and tags corresponding to tag-holding shares, the present invention facilitates (among other things) anonymous transactions, particularly anonymous recommendations with selectable degrees of accuracy.

Embodiments of the present invention may be more readily described with reference to FIGS. Z-49. Referring now to FIG. 2, there is illustrated a block diagram of a system 200 in accordance with the present invention. In particular, an anonymity service 203 is provided as an intermediary between entities 202 (e.g.., acquirers of services or digital products) and one or more providers 204. In practice, the anonymity service 203 and provider 204 can be in communication with a clearing house and a credit agency in support of commercial transactions; for clarity, the clearing house and credit agency are not illustrated in FIG. 2. Although direct connections are illustrated between the anonymity service 203 and the various other elements of the system 200, it is understood that these connections may comprise paths established through, public networks such as the Internet or World Wide Web, within private networks or through a combination of public and private networks.

In the context of the present invention, each of a plurality of entities 202 may comprise any individual or organization capable of conducting activities within the electronic commerce system 200. Such activities may comprise virtually any actions in which an entity is willing to include its entity identification. For example, such activities may include, but are not limited to, providing or acquiring something of value to/from a third party, such as participating in a survey, subscribing to a newsletter or affinity group chat room, or acquiring services or digital products from the provider 204. In the context of the present invention, digital products comprise anything capable of delivery via a communication network. For example, digital products may include downloadable software or digital data such as text, audio, video or images. Those having ordinary skill in the art will recognize that other types of digital products may be used in conjunction with embodiments of the present invention, and the present invention is not limited in this regard. Regardless, each activity conducted within the system 200 should be susceptible to unique identification. For example, activities may include actions such as, "purchased video disk of Cinderella," "downloaded trial version of XYZ Co.'s video game software", 'donated money to relief fund", etc. In sum, activities in the context of the present invention comprise any actions having associated therewith an entity identification and that are susceptible to a unique identification.

In practice, each entity 202 communicates with the anonymity service 203 via a computer implementing a network communication program, such as a browser or the like. The provider 204, in turn, may likewise comprise any individual or organization that provides services or digital products or that accepts information from entities via a communication network. More generally, the provider 204 may comprise any individual or organization that is the intended target of an entity's action(s) and is therefore a recipient of that entity's identification. The anonymity service 203 preferably comprises a computer-implemented service available via a communication network such as the Internet or World Wide Web. As depicted in FIG. 2, the anonymity service 203 preferably comprises a processor 210 and memory 212. For example, the anonymity service may be implemented using one or more network servers executing stored software routines as known in the art.

The anonymity service 203 is in communication with a plurality of shareholders 207. As described in greater detail below, each of the shareholders 207 is provided with a secret share (preferably representative of at least an entity's iidentification) which, by itself, does not enable an individual shareholder to reconstruct a secret, i.e., an entity's identity. In a preferred embodiment, the process used to generate the secret shares is reproducible; that is, for any given input, a predictable set of secret shares will be provided as output. Furthermore, it is preferred that the process used to generate the secret shares possess the property that any secret share is equally likely to take on a particular value as any other value. For example, if secret shares are expressed as n-bit binary words, there exists a finite set of secret share values comprising $2^n$ possible values. Thus, the likelihood of any one secret share value of the finite set of secret share values being generated is preferably equivalent to $\frac{1}{2^n}$.

The set of shareholders 207 is preferably static relative to the anonymity service 203 and to the number of secret share values in the finite set of secret share values. That is, for a given entity's identification, information corresponding to a given secret share value is always sent to the same shareholder of the set of shareholders 207, which set itself is unchanging from the anonymity services perspective. For example, if there are ten possible secret shares ($S_1$ through $S_{10}$) and ten possible shareholders ($H_1$ through $H_{10}$), a possible arrangement is to uniquely assign one of the ten secret share values to a corresponding one of the ten shareholders. Further, it is preferable to ensure that the first shareholder always receives the first secret share value produced, the second shareholder always receives the second secret share value produced, and so on. Of course, other arrangements are possible. If multiple anonymity services are provided, each could be associated with its own, well-described and not necessarily static, plurality of shareholders, which plurality of shareholders may or may not include shareholders that are also associated with other anonymity services.

In any event, each shareholder is capable of receiving secret shares and information regarding activities from the anonymity service 203. To this end, each shareholder preferably comprises a computer-implemented device capable of communicating with the anonymity service 203. Because secret sharing schemes are vulnerable to the extent that separate shareholders could collaborate to ascertain the secret in their possession, it is advantageous to maintain the identity of each shareholder in confidence from the other shareholders. Furthermore, it is preferred to select the shareholders such that they have an inherent reason not to collaborate with each other. For example, shareholders in possession of the secret shares corresponding to a single secret may comprise competitors in a given industry. Such competitors are inherently unlikely or unwilling to share information with each other. Additionally, the shareholders may comprise a privacy organization that is dedicated to advocating privacy in electronic commerce, and therefore unlikely to collaborate with other shareholders. Further still, the entity 202 may comprise one of the shareholders, or the shareholders 207 may be known to the entity 202, such as family members or friends or an Internet mailing list constructed around a common interest.

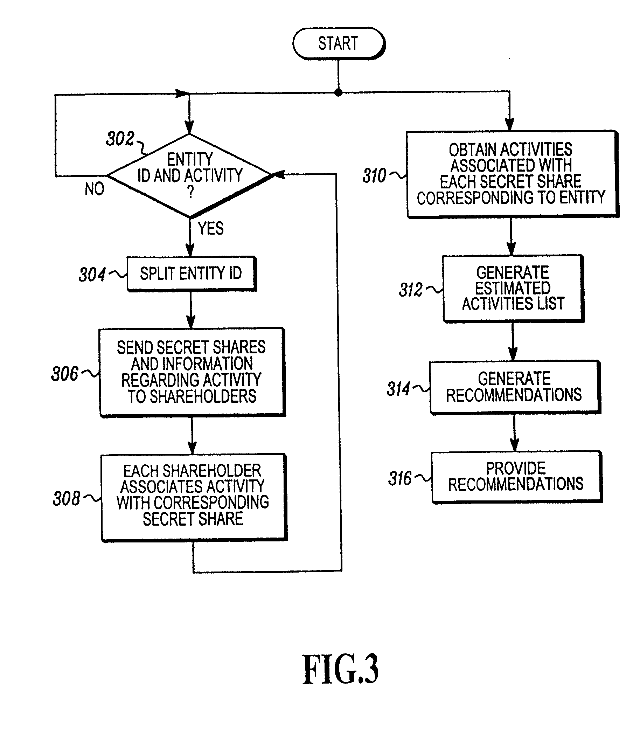

Referring now to FIG. 3, a method in accordance with a first embodiment of the present invention is illustrated. In particular, the method of FIG. 3 is preferably implemented by the anonymity service 203. As shown, two parallel, independent paths are provided. On the left, a path is provided whereby activities by separate entities are added to sets of activities associated with separate secret shares. On the right, a path is provided whereby a set of recommendations, based on the sets of activities associated with the separate secret shares, may be generated.

At block 302, it is continuously determined whether a given entity has transmitted its entity identification and information regarding one or more activities to the anonymity service. In an embodiment of the present invention, the entity identification and information regarding the one or more activities may comprise part of a service request sent to the anonymity service. In this manner, the anonymity service acts as an intermediary between the entity and the third party to which the entitys action activity is directed. The anonymity service can be provided as an additional service by an entitys on-line service provider, such as an Internet Service Provider (ISP). In one embodiment of the present invention, the information provided at block 302 is securely transmitted to the anonymity service. Security in the transmission of such information may be provided using known techniques, such as encryption or a trusted path.

The entity identification may comprise any unique identifier such as a public key, credit card number or the like. Likewise, the information regarding the one or more activities may comprise any unique value or description sufficient to distinguish one activity from another. In practice, at least with initial implementations, it is expected that such activity-describing information will be application dependent. For example, if the present invention is limited in its application to the realm of activities related to books (e.g., on-line purchases, ratings, etc.), the existing system of International Standard Book Number (ISBN) codes could be used to uniquely identify particular books referenced in a given activity. Similar use could be made of stock keeping unit (SKU) codes or similar codes currently provided on many products. More generally, various schemes have been proposed, such as the so-called Consumer Profile Exchange Standard (CPEX) and Digital Object Identifiers (DOI) that may be applicable across a broad spectrum of activities, and may therefore be beneficially applied to the present invention.

When an entity has transmitted its entity identification and information regarding the one or more activities, processing continues at block 304 where a cryptographic or other secret splitting technique is used to split the entity identification into a plurality of secret shares. Such secret splitting techniques are well known in the art. In essence, a secret splitting technique takes a secret and divides it up into pieces such that each piece by itself does not allow a holder of that piece to reconstruct the secret. However, a holder in possession of all of the pieces is able to reconstruct the secret.

The embodiments of the present invention described herein require well-. described and reproducible secret splitting, i.e., a secret splitting technique that results in reproducible sets of secret share values for a given entity identification. A number of cryptographic secret sharing schemes use random number generation and, as a result, the secret share values are generally not reproducible. Typically, in such schemes, a seed value is typically used to initialize a process that generates a stream of essentially random data, which random data (i.e., the secret shares) is then used to secure other data. Random number generation usually enhances the secrecy of a scheme because a well-diefined, predetermined relationship does not exist between the secret share values and the secret, and the shares hence reveal less information about. the secret. As a practical matter, however, embodiments of the present invention cannot be implemented using a secret splitting/sharing scheme that results in secret shares that are different each time for identical inputs. Rather, embodiments of the present invention are preferably implemented using a secret splitting scheme that generates one of a finite number of possible sets of secret shares each time for identical inputs. The number of possible secret share sets for a given entity identification should be small compared to: (a) the average number of times an entity is expected to use the service, and (b) the total number of sets of secret shares possible (for m n-bit secret shares, this number is $2^{nm}$). Further, depending on usage and number of activities, the size of the number of possible secret share sets for any given entity identity also affects recommendation accuracy.

Most of the cryptographic secret sharing schemes that require random numbers can be easily modified for use with embodiments of the present invention. For example, in one approach, random numbers can be generated once, stored with an entity identification by the anonymity service, and used every time the entity identification is received thereafter. In another approach, the same random number can be used for all entity identities.

However, both of these approaches reduce the secrecy of the schemes. The first approach provides more privacy to the consumer relative to the shareholders because the shareholders have data from only one entity to reverse-engineer in order to obtain information about the corresponding random number and, through it and a single secret share value, information about the entity identification. However, because the first approach requires storage of entity identifications by the anonymity service, (not required by the second approach), it provides severely reduced privacy to the consumer with respect to the anonymity service.

The second approach provides less privacy to the consumer relative to the shareholders because they might be able to analyze patterns of the shares corresponding to different entity identifications to make educated guesses about the single random number, and from that information also determine information about entity identification from a single secret share value. Similar schemes, with the fixed numbers changing every so often, even at random, and being stored against entity identification for later reference, can also be used to provide more privacy to the consumer relative to the shareholders, though these will still be privacy-compromised to some degree with respect to the anonymity service and could decrease recommendation accuracy.

A third approach is for the anonymity service to use a function of the entity identification to generate the random data for that entity identification so that the random data does not have to be stored. The service can thereafter construct the random data each time it is needed. Because each entity identification is presumably unique, the resulting random data will not be the same for all entity identifications, and the function used can be changed occasionally if required. In particular, the function can be randomly chosen from a small, finite set of functions, The scheme could be made more secure if the function were a so-called one-way function, i.e., a function that is easy to compute but difficult to invert. This would make it harder to recover an entity identification from a secret share value. Those having ordinary skill in the art will recognize that other types of permutations may be used to generate reproducible shares in conjunction with the present invention, and the present invention is not limited in this regard.

An exemplary secret sharing scheme that uses random numbers, and its modification for use with the present invention, is now described. As an example of secret sharing, assume that a party A wishes to split a secret S into three shares that will be subsequently given to parties B, C and D. In accordance with a preferred embodiment of the present invention, further assume that the secret S is represented as a string of bits having length M. First, A generates two random bit strings, X and Y, each of length M. (Techniques for generating random bit strings are well known in the art of cryptography and are therefore not described in detail herein.) The secret S is thereafter exclusive-OR'd with X and Y to provide a new bit string Z, also of length M:

$$Z = S \oplus X \oplus Y$$

Thereafter, A provides Z, X and Y (the secret shares) to, for example, B, C and D (the shareholders), respectively. Note that none of B, C or D is able to reconstruct the secret S based solely on their respective share (Z, X or Y). To the contrary, the only way to reconstruct the secret is to combine the secret shares once again:

$$S = Z \oplus X \oplus Y$$

The above-described scheme can be modified to generate reproducible secrets instead of random secrets. Instead of random bit strings, X and Y could be outputs of well-defined functions of the entity identification. For example, X and Y could be squares, cubes, and/or $n^{th}$ powers of the entity identification. Because X and Y would no longer be random, the security of the secret splitting scheme would be reduced. However, this is a cost of obtaining X and Y values that are reproducible. To mitigate the impact on the security, the function can be changed, e.g., to the $m^{th}$ power, after a certain period of time, or it can be a different function depending on parameters such as the day of the week, or it can be a function randomly chosen from a finite set of functions (for example, the function could be one of the 101-105th powers). The total number of different functions used for each entity identification should be small compared to the average number of times each entity identification is used in the anonymity service, and small compared to the total number of sets of secret shares possible. The larger the number of functions, the more privacy is protected from the secret shareholders at the possible expense of recommendation accuracy.

While this is a simple example, it illustrates the basic concept and implementation of secret splitting modified for reproducibility. Simple extensions will be evident to those having ordinary skill in the art. For example, a larger number of shareholders may be employed by simply generating additional reproducible bit strings to combine with the secret. One publication teaching a variety of cryptographic secret splitting techniques is 'Applied Cryptography" by Bruce Schneier (John Marley & Sons, 1996), the teachings of which are incorporated herein by this reference. Referring back to FIG. 3, the number of secret shares provided at block 304 for the entity identification is a matter of design choice. However, in a preferred embodiment, the number of secret shares is always the same and the secret splitting technique is reproducible, though equivalent outputs may not always result from equivalent inputs.

So-called perfect secret splitting schemes are those schemes that result in secret shares in which any given secret share does not provide any information to an adverse party by which the secret may be identified. A number of known perfect secret sharing schemes result in at least one random secret. Modifying a perfect scheme to produce reproducible shares as described earlier could make the scheme non-perfect.

Besides cryptographic secret splitting schemes, other schemes which require less computation and in which individual secret shares do provide some information regarding the secret may also be used, although are not preferred. A simple illustration of a non-cryptographic secret splitting technique would be to split the secret up into constituent parts and providing those parts as the secret shares directly. For example, if a given entity's identification is simply 'John Smith", the secret shares could be provided as the nine letters in the identification, i.e., "J", "o", "h", "n", "s", "m", "i", "t" and "h". While no one secret share (letter) allows a given shareholder to reconstruct the entire secret, it does provide some information about the secret.

At block 306, the secret shares created at block 304 are sent to shareholders along with the information regarding the one or more activities. While the secret shares could be sent to the shareholders in encrypted form in order to enhance security, the secret shares are sent unencrypted in a presently preferred embodiment. Likewise, the information regarding the one or more activities may be sent in an encrypted form or otherwise secure manner, but this is not preferred. Nevertheless, the information regarding the one or more activities is sent to the shareholders each time a secret share is produced.

The length of time required by each shareholder to store a corresponding secret share is a matter of design choice and may be dictated, for example, by legal requirements setting the length of time documentation regarding a transaction is to be stored. Likewise, the duration for which the information regarding the one or more activities is kept is a matter of design choice. In one embodiment of the present invention, the information regarding the one or more activities is kept indefinitely. In another embodiment, however, activities are assigned an expiration date such that they are no longer available after the expiration date. Further still, activities could be continuously inspected to see if no one has engaged in a certain activity for a certain period of time, in which case the activity is purged. Those having ordinary skill in the art will recognize that other schemes may be possible or desirable. Regardless, once a secret has been split and sent to the respective shareholders, the anonymity service discards any copies of the secret. In essence, the anonymity service consumes each secret and distributes the resulting secret shares to corresponding shareholders. An exception to this, albeit not a preferred one, arises where the anonymity service stores the random number associated with a particular entity identification, as described previously.

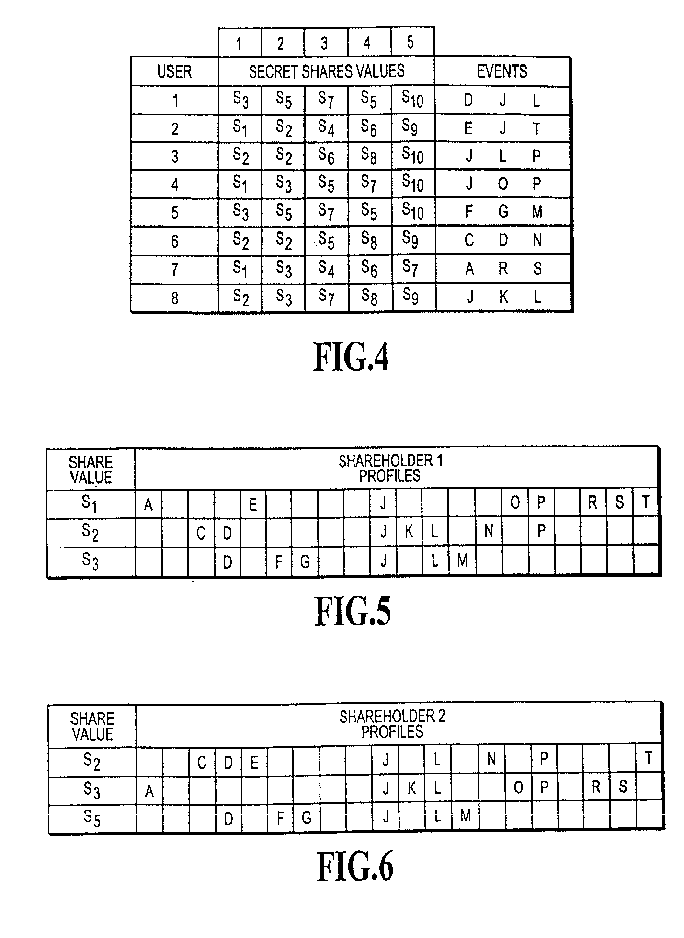

At block 308, the one or more activities sent to the shareholder are associated with the secret share. In a preferred embodiment, this is accomplished by each shareholder maintaining one or more profiles of activities in, for example, a computer-readable medium such as a digital memory device or the like. Each shareholder maintains a separate activity list for each secret share value. An example illustrating this is provided with reference to FIGS. 4 and 5.

FIG. 4 illustrates an exemplary system in which it is assumed that the finite set of secret share values comprises only ten values ($S_1$ through $S_{10}$). The number of possible secret share values in this example has been kept low for ease of illustration; in practice, this number would be substantially larger. Additionally, it is assumed that there are only twenty possible activities (labeled "A" through "T"). Again, the number of possible activities in this example has been kept low for ease of illustration; in an actual implementation, this number would be significantly larger. It is further assumed that the identification of each entity (user) is split into five secret shares, which five secret shares are equally likely take on any of the ten possible secret share values. Note that the secret share values derived for any given secret may result in multiple occurrences of the same secret share value, e.g., the identification of User 1, when split, results in two instances of the $S_5$ secret share value. Finally, there are five shareholders available to receive, according to a predefined distribution scheme, the five secret shares generated for any given secret. For example, for each secret split into the five secret shares, a first secret share is provided to a first shareholder, a second secret share is provided to a second shareholder and so on. In a preferred embodiment, the activities for any given entity are stored in the same profiles to the extent that the secret splitting scheme always provides a reproducible output in response to the given entity's identity, which output causes the information regarding that entity's activities to always be sent to the same shareholders for association with the same secret share values. When the secret splitting scheme does not always provide the same output, but provides one of a finite set of outputs, each generated by the use of a different function as described earlier, the activities will go to different profiles. The example described herein, for ease of illustration, corresponds to the situation where the secret shares generated for a particular entity identity are always the same.

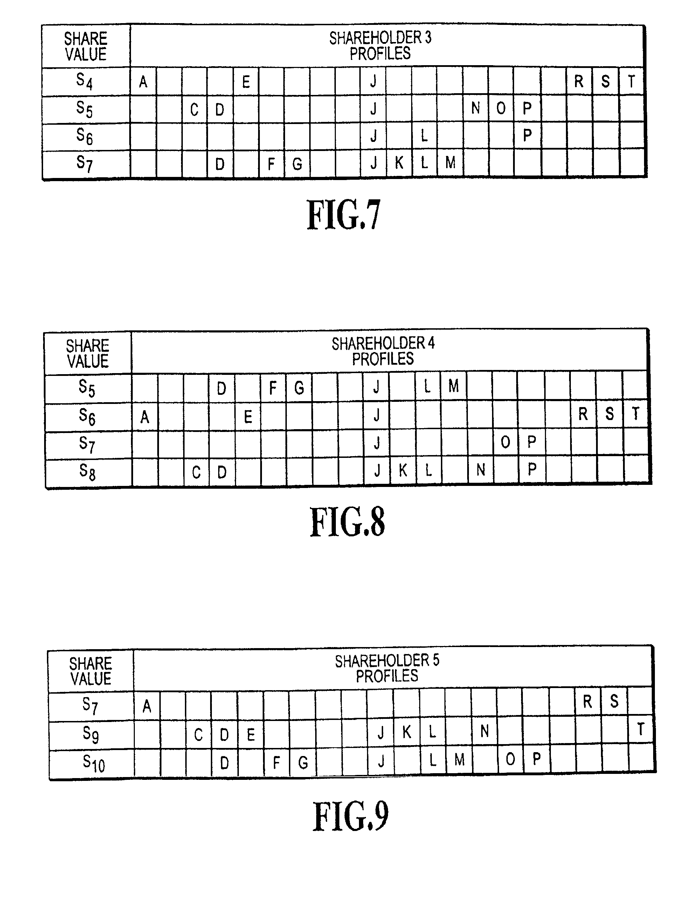

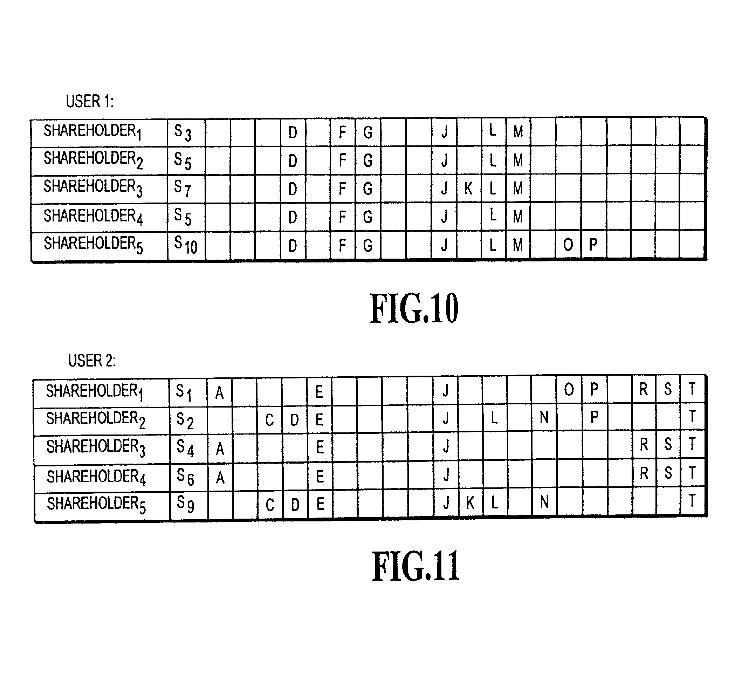

In FIG. 4, eight exemplary users are shown and their corresponding secret shares. The column numbers 1-5 above the secret share values correspond to the shareholders to which each secret share value is sent. That is, the first column of secret share values sets forth those secret share values sent to the first shareholder; the second column sets forth those secret share values sent to the second shareholder; etc. Additionally, each user is assumed to have taken part in three activities randomly chosen from the twenty possible activities. The limit of three activities was chosen for ease of illustration. In practice, the number of possible activities engaged in by a given entity could be less and, in many instances, would likely be more. Note that some activities may considered to be more popular, e.g., activity "J", in that multiple users have engaged in those activities. Regardless, profiles associated with each secret share value sent to the first shareholder (Shareholder 1) in this example are further illustrated in FIG. 5. Each profile is the result of the activities engaged in by users whose identity, when split according to the secret splitting scheme, results in one of the secret share values shown in FIG. 5. For example, note that the "J" activity is reflected in the each of the $S_1$, $S_2$ and $S_3$ profiles by virtue of it being included at least in the activities of Users 1, 2 and 3. Furthermore, even though an activity is included in the activities of multiple users, it is reflected in any given profile only once. Exemplary profiles maintained by each shareholder in the example based on FIG. 4 are shown in each of FIGS. 5-9.

Referring once again to FIG. 3, the process of generating recommendations for a given entity is illustrated by the path comprising blocks 310-316. At block 310, the sets of activities (e.g., the profiles) associated with each secret share corresponding to the given entity are obtained. For example, referring once again to FIGS. 4 and 5, if it was desired to generate recommendations for User 4, the profiles associated with secret

shares $S_1$, $S_3$, $S_5$, $S_7$ and $S_{10}$ would be obtained. Because each profile includes information regarding not only the activities of User 4, but a number of the other users as well, knowledge of any one profile does not allow an adverse party to reconstruct User 4's actual activities list. The process of block 310, in implementation, requires that the given entity's identification is first obtained and then split into a corresponding set of secret shares. This set of secret shares is then sent to the corresponding shareholders as part of requests to obtain the profiles corresponding to those secret shares. Once again, this is possible assuming that the secret splitting scheme is statically reproducible. With regard to the current example (FIG. 4), FIGS. IO-17 illustrate, for each user, the profiles corresponding to the secret share values generated by the user's identity.

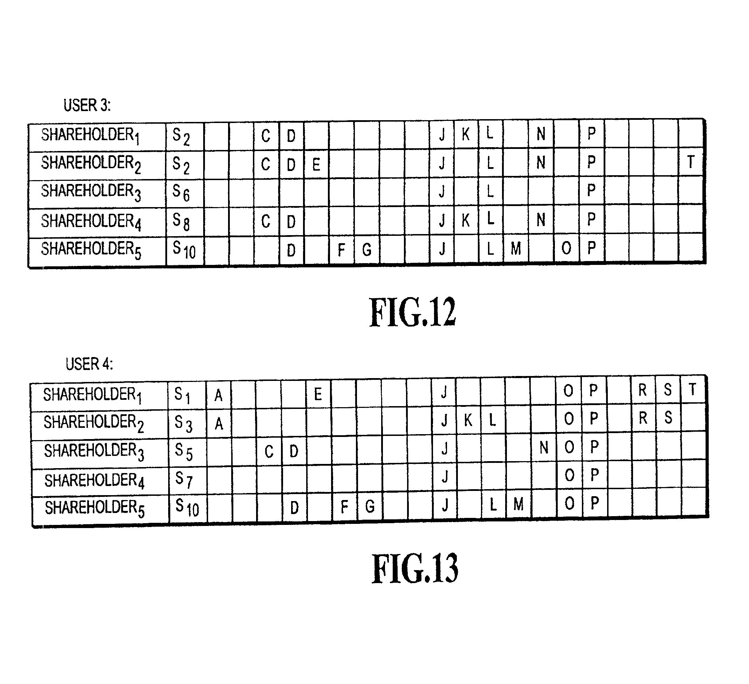

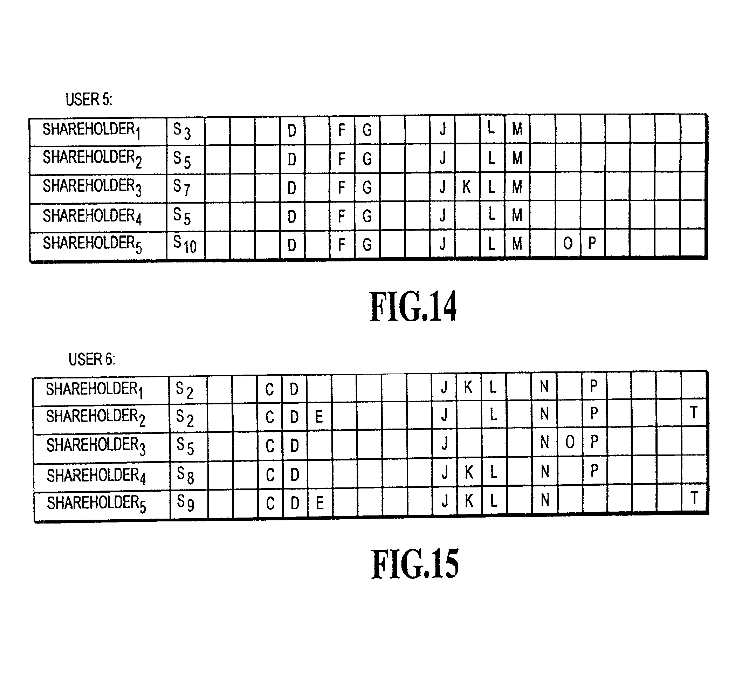

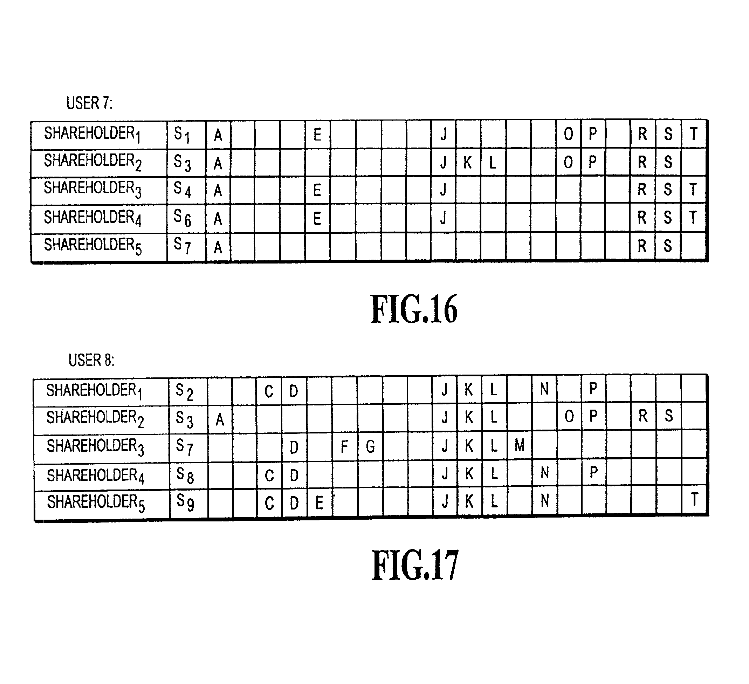

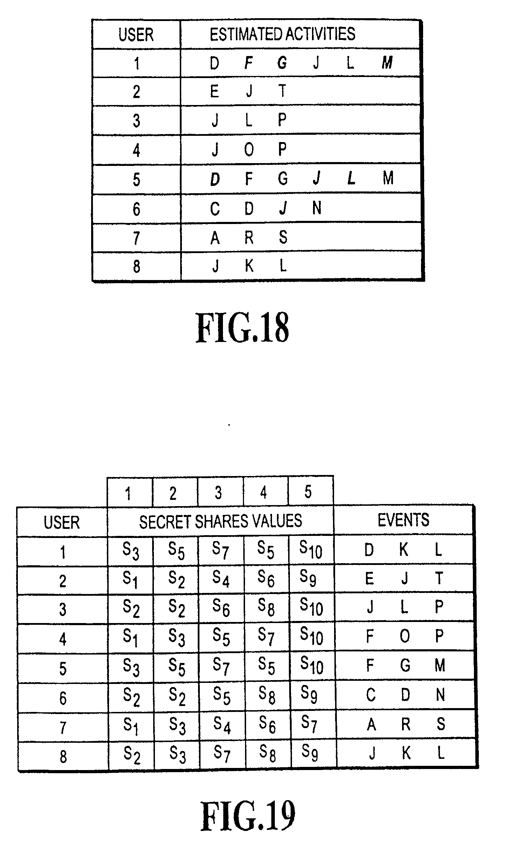

At block 312, an estimated activities list corresponding to the given user is generated based on the profiles obtained at block 310. To this end, an intersection of the multiple profiles from block 310 is calculated. The estimated activities list thus comprises only those activities that are found in each of the profiles obtained at block 310. In one embodiment of the present invention, such estimated activities lists may be stored on a computer-readable medium. With regard to the example based on FIG. 4, this is further illustrated with regard to FIGS. 1 O-18. Thus, in the estimated activities lists shown in FIG. 18, each activity is seen to occur in each profile associated with the given user. For example, with respect to User 1 (FIG. IO), the intersection of the activities associated with secret shares $S_3$, $S_5$, $S_7$, $S_5$ and $S_{10}$ results in an estimated activities list comprising activities "D", "F", "G", "J", "L" and "M", as shown. Similar estimated activities lists for each of the other seven users (FIGS. 11-17), as shown in FIG. 18, are calculated in the same manner. In order to preserve the anonymity of the entities, the estimated activities lists are preferably generated apart from the corresponding entity identifications.

The nature of the process used to generate estimated activities lists is such that activities not actually engaged in by a given entity can be added to the estimated activities list for that entity. Such "added" activities are illustrated in boldfaced and italicized type in the estimated activities lists of FIG. 18. For example, activity "J", appearing in each profile, is frequently added to the estimated activities lists of entities that did not actually engage in activity "J". Additionally, activities "D" and "L", although not occurring in every profile, occur with sufficient frequency that they too are inaccurately added to the estimated activities lists of User 5. Such inaccuracies are a cost of being able to provide recommendations in an anonymous manner. The likelihood of such additions to the estimated activities lists is lowest when each activity is equally likely. Each activity is not equally likely in the example shown, where activity J is much more likely than other activities.

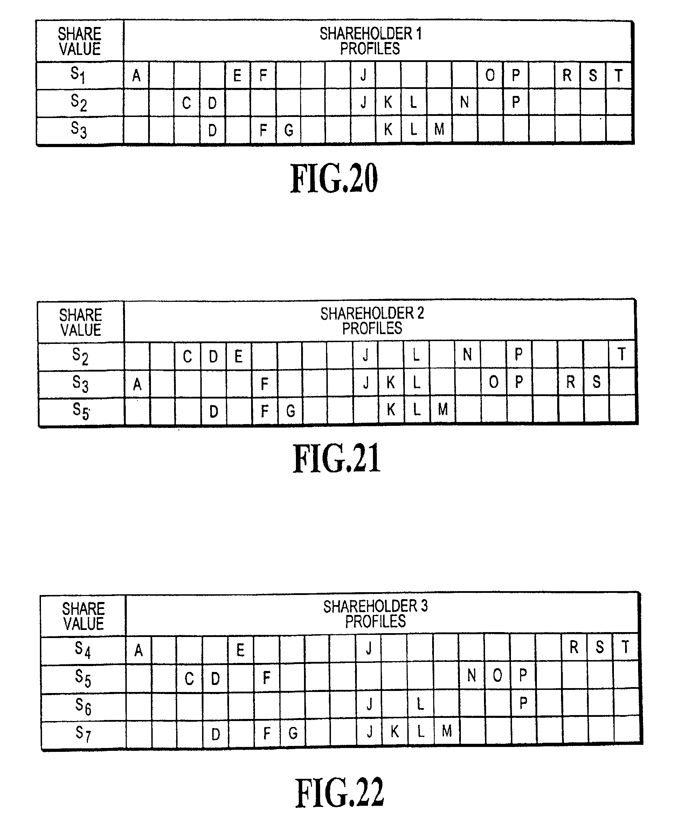

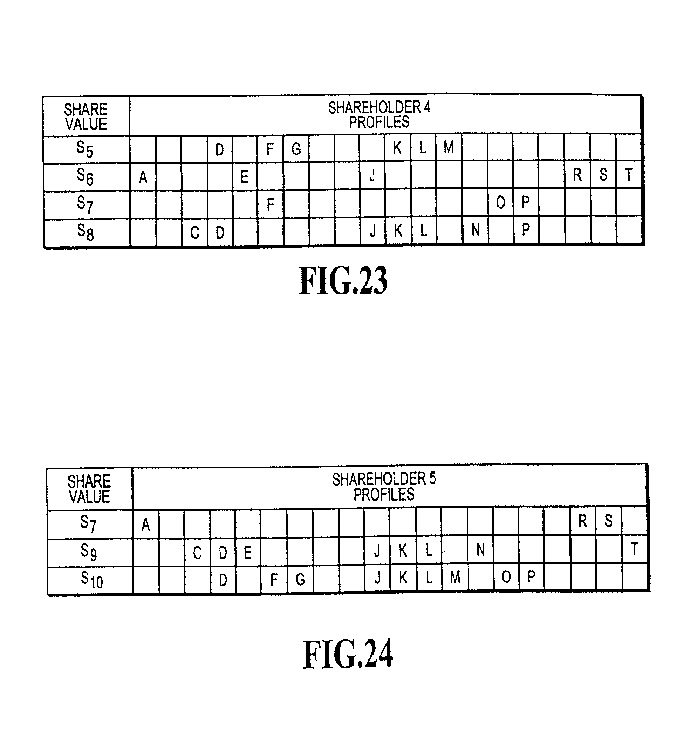

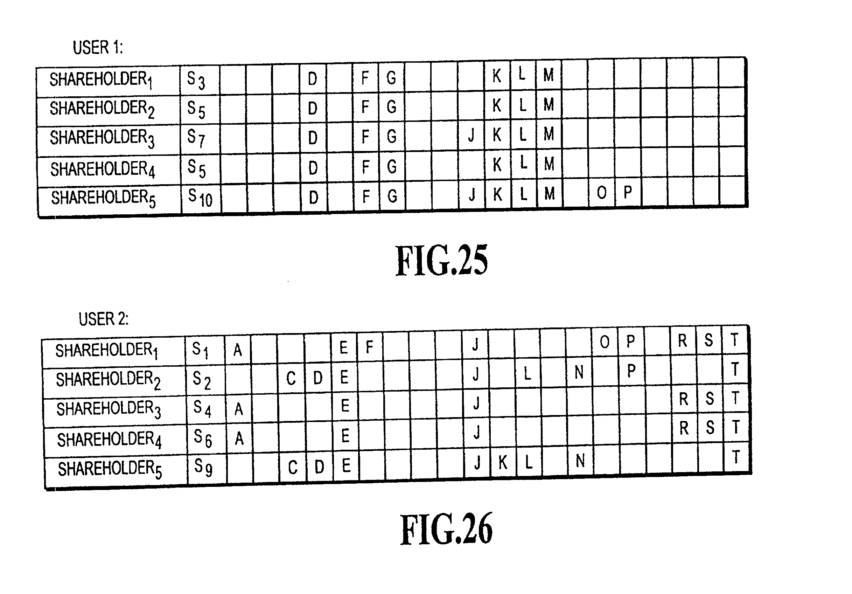

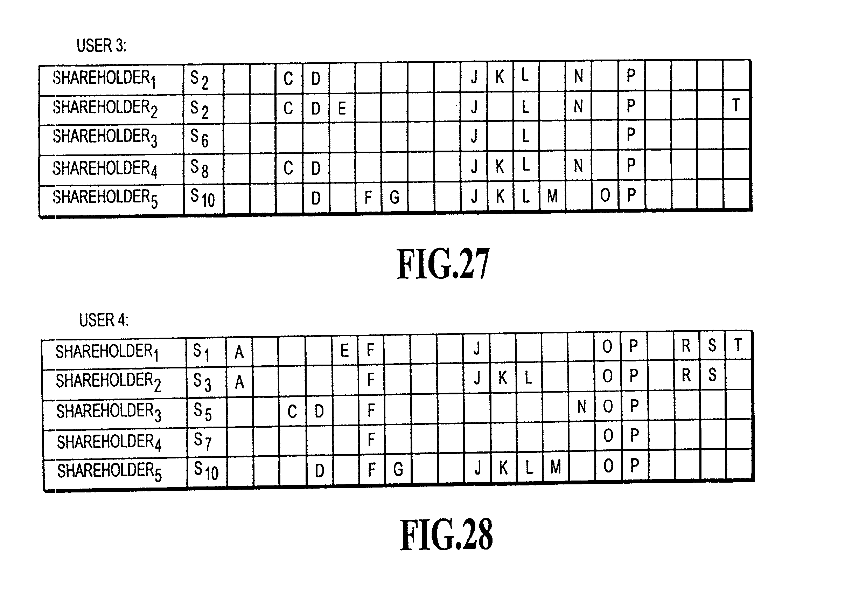

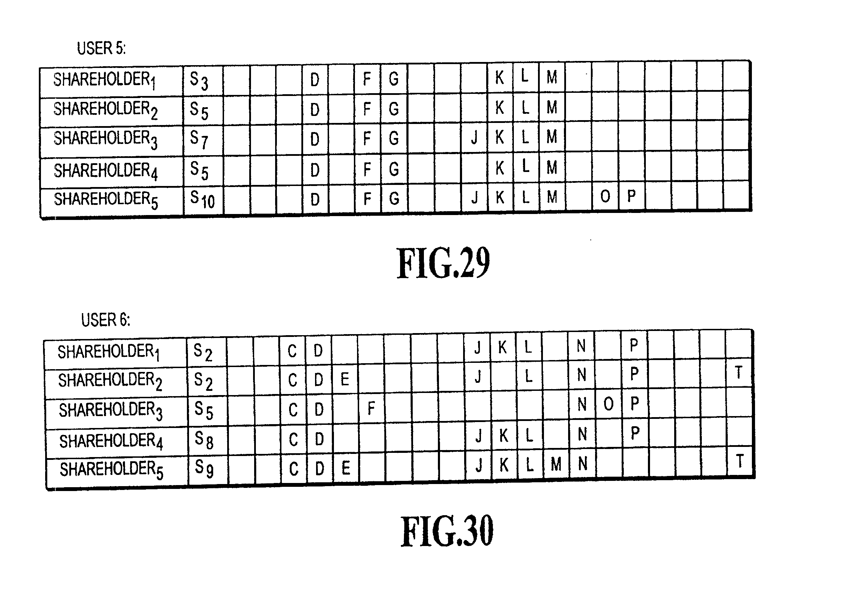

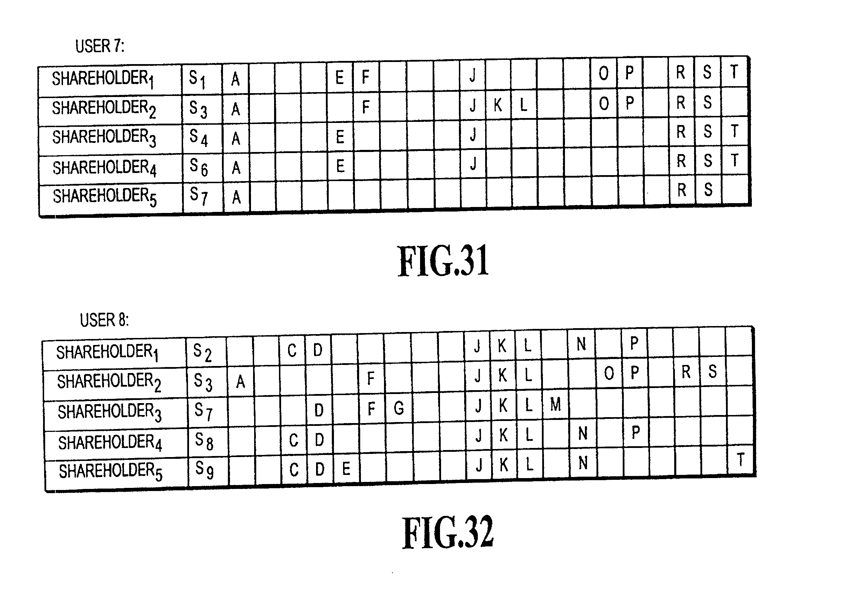

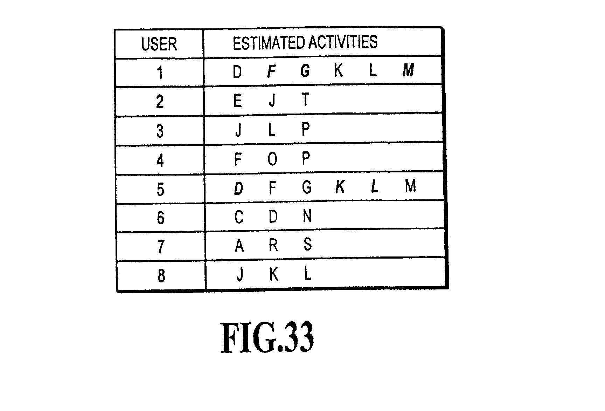

The effect of greater uniformity in distribution is shown in FIGS. 19-33. Comparison of FIG. 19 with FIG. 4 reveals that the occurrences of activity "J" for Users 1 and 4 have been replaced with occurrences of activity "K" and "F", respectively. The profiles resulting from the example illustrated in FIG. 19 are illustrated in FIGS. 20-24. Note that in the profiles shown in FIGS. 20-24, when compared to those in FIGS. 5-9, the activities are closer to being equally likely. While the example does not illustrate this, this could also slightly compromise entity privacy, which, as alluded to above, usually bears an inverse relationship with recommendation accuracy. Upon collecting the relevant profiles for each user, as illustrated in FIGS. 25-32, the intersections of the profiles for each user may be calculated leading to the estimated activities list shown in FIG. 33. Note that the estimated activities lists illustrated in FIG. 33 are slightly more accurate than those illustrated in FIG. 18 in that the estimated activities for User 6 do not include an otherwise inaccurate activity "J".

When the secret shares are reproducible but not always identical for a given entity identity, the above described process is preferably repeated for each set of secret shares corresponding to the entity identity. This involves more computation and could reduce recommendation accuracy, but will improve entity privacy with respect to shareholders.

Referring once again to FIG. 3, at block 314, a set of recommendations may be generated based on the estimated activities list. In the context of the present invention, a recommendation may comprise any information regarding goods, services, opportunities or any other information that may spur the recipient of the information on to further activities. For example, if the estimated activities list indicates that the corresponding entity has recently applied for a mortgage using an online broker, a set of recommendations may comprise the names of various firms that provide homeowner's insurance. Those having ordinary skill in the art will recognize that a variety of techniques exist for establishing a set of recommendations based on knowledge of previous (estimated) activities. Thereafter, at block 316, the recommendations are provided to the corresponding entity using the entity's identification. Preferably, this is accomplished by reconstructing the entity identification based on the secret shares for that entity. To this end, the anonymity provider retains, for a given entity, the identifications of the shareholders in possession of secret shares needed to reconstruct the entity identification. Furthermore, the anonymity service may retain transaction identifications that identify the particular shareholders needed relative to a given transaction.

For example, assume an entity purchases goods from a provider via the anonymity service. A technique for providing anonymity in such a transaction is disclosed in co-pending U.S. Patent Application Serial No. 09/944739, the teachings of which application are incorporated herein by this reference. As disclosed in that application, entities are able to acquire digital products in an anonymous fashion using secret splitting techniques such that third parties (including providers) are unable to identify specific acquisitions made by a given entity. Nevertheless, a provider may wish to make further recommendations for other products based on one or more transactions by a given entity. Using the presently disclosed technique, the anonymity service can construct a set of recommendations and, using the techniques disclosed in the co-pending application, provide the recommendations in a manner that preserves entity privacy.

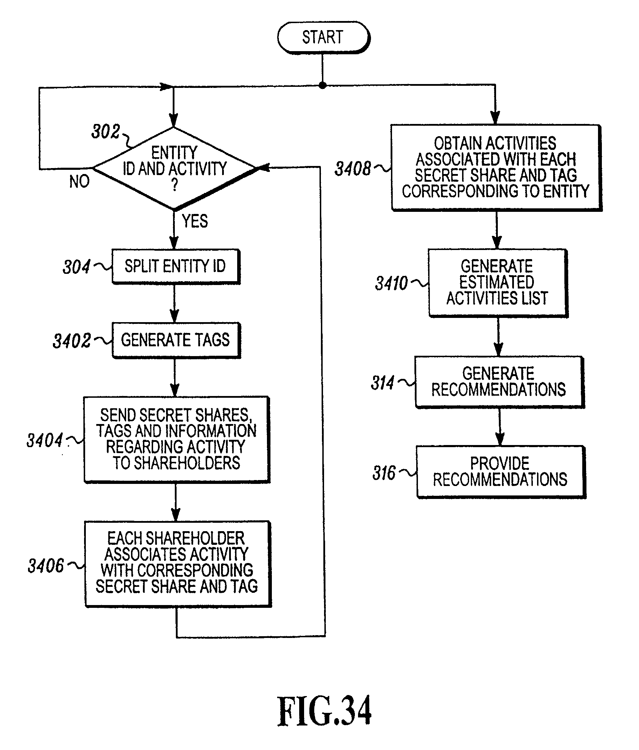

Referring now to FIG. 34, a method in accordance with a second embodiment of the present invention is illustrated. The method illustrated in FIG. 34 is similar to that illustrated in FIG. 3, with the exception that recommendation accuracy (at the expense of some privacy) is improved through the use of tags. As with the method of FIG. 3, the method illustrated in FIG. 34 is preferably implemented by the anonymity service 203. As in the method of FIG. 3, the method of FIG. 34 begins with the reception of an entity identification and information regarding at least one activity engaged in by a corresponding entity. Thereafter the entity identification is split into a plurality of secret shares as described previously.

At block 3402, the shares are then divided into tag-holding and non-tag-holding shares. Additional processing occurs whereby at least one tag corresponding to the entity is generated. Broadly, tags in accordance with the present invention comprise any indicia that serve to further identify an entity in addition to the entity identification and the secret shares representative thereof. In one embodiment, the tags are based on the entity identification and, in particular, upon at. least a portion of the plurality of secret shares. To this end, a hash function may be employed.

As known in the art, a hash function is a computationally efficient function, $h$ , mapping binary strings of arbitrary length, $x$, to binary stings of some fixed length, $h(x)$, often referred to as hash values. Generally, hash values serve as a compact representation of the input value. In a typical application, such as a cryptographic use, hash functions that provide an n-bit hash values are ideally designed such that any randomly chosen input string will map to a given hash value with a probability of $2^{-n}$. As described in Handbook of Applied Cryptography by Menezes et al. (CRC Press 1997), Chapter 9, the teachings of which are incorporated herein by this reference, a variety of hash function characteristics are used to describe different categories of has functions. In particular, a one-way hash function is a function such that finding an input which hashes to a predetermined hash value is difficult, and a collision resistant hash function is a function such that finding any two or more inputs having the same hash value is difficult. For the purposes of embodiments of the present invention described herein, a one-way (or non-invertible) hash function having varying degrees of collision resistance is preferably employed. That is, for purposes of embodiments of the present invention describer herein, a one-way hash function that does map two or more inputs to the same hash value with predictable frequency is preferable. As will be apparent from the discussion below, use of a one-way hash function with a relatively high level of collision resistance (i.e., collisions less likely to occur) will result in greatly improved recommendation accuracy at the expense of a loss in privacy. Conversely, a one-way hash function with a relatively low level of collision resistance (i.e., collisions more likely to occur) will result in less accurate recommendations with improved privacy. In summary, to the extent that one-way hash functions having varying degrees of collision resistance can be designed, the present invention can provide (among other things) varying degrees of recommendation accuracy versus privacy.

In a presently preferred embodiment, tags are provided using a one-way hash function as described above operating upon at least a portion of a plurality of secret shares corresponding to a given entity. Let $S_{ij}$ represent the j'th secret share corresponding to an i'th entity, where j = 1 to K. For each secret share, a corresponding tag, $h_{ij}$, is determined according to:

$$h_{ij} = h(\text{all } S_{ik} \text{ for } k \neq j, k = 1K \, K) \qquad \text{Eq. 1}$$

That is, for any given tag-holding secret share of a plurality of secret shares, its corresponding tag is calculated as a hash value based on all of the plurality of secret shares except for the given secret share. Suitable has functions for this purpose include the so-called Secure Hash Algorithm (SHA1) and Message Digest (MD5) hash functions, although those having ordinary skill in the art will recognize that other hash functions could be employed as a matter of design choice. As noted above, depending on the level of recommendation accuracy versus privacy desired, the hash function used should be correspondingly designed to provide a predictable level of collision resistance. Although the example illustrated herein specifies a certain combination of secret shares to use when generating tags, the present invention need not be limited in this regard. For example, a smaller subset of secret shares could be employed. Further still, data other than the secret shares could be used as input to the hash function, for example, the entity identification itself, a different set of secret shares based on the entity identification, or some other piece or collection of information uniquely corresponding to the given entity.

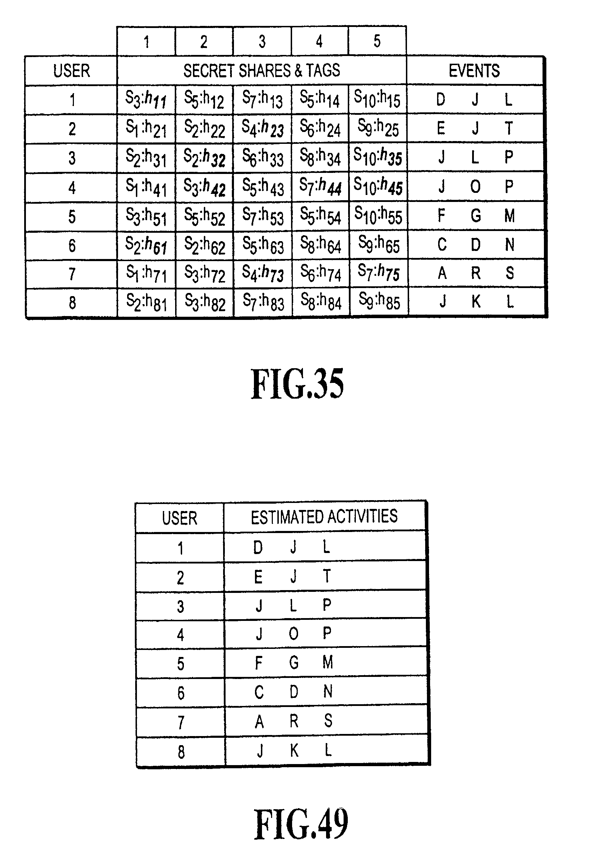

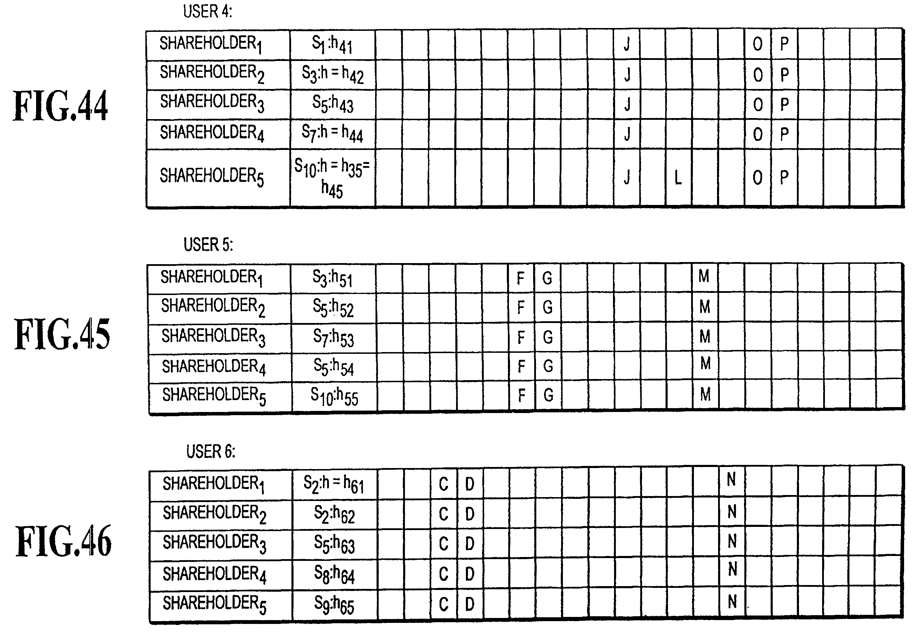

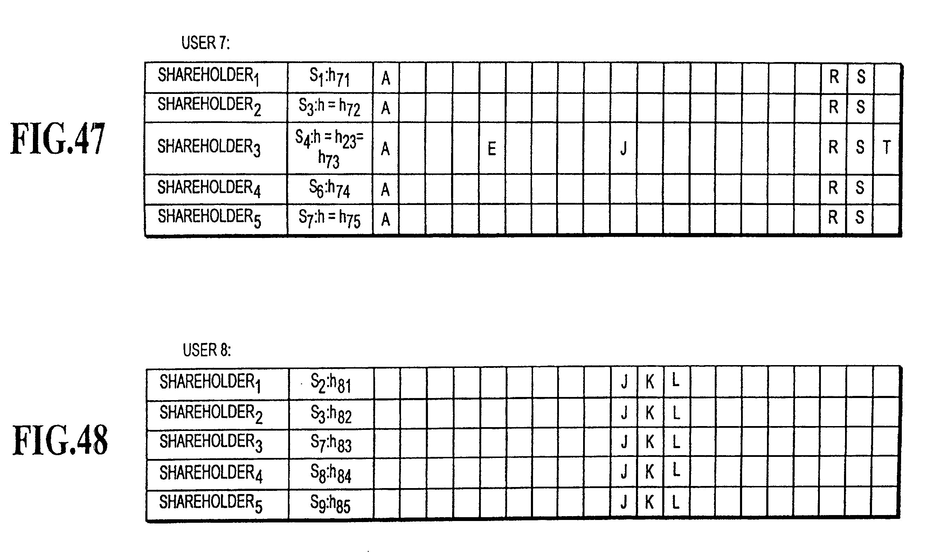

Once generated, the secret shares, their differentiation into tag-holding and non-tag-holding shares, tags corresponding to tag-holding shares, and the information regarding the at least one activity are provided to the shareholders at block 3404 in a manner similar, if not identical, to that described above with respect to block 306 in FIG. 3. Thereafter, at block 3406, the one or more activities sent to the shareholder are associated with each secret share and, if it is tag-holding, with its corresponding tag. As before, this is accomplished by each shareholder maintaining one or more profiles of activities in, for example, a computer-readable medium such as a digital memory device or the like. In accordance with this embodiment, each shareholder maintains a separate activity list for each secret share value and, if the share is tag-holding, its corresponding tag. Because the hash function used to produce the tags is designed to provide a predictable frequency of collisions, it is possible for identical hash values to be provided in response to different inputs (e.g., secret shares). An example illustrating this is provided in FIGS. 35-49.

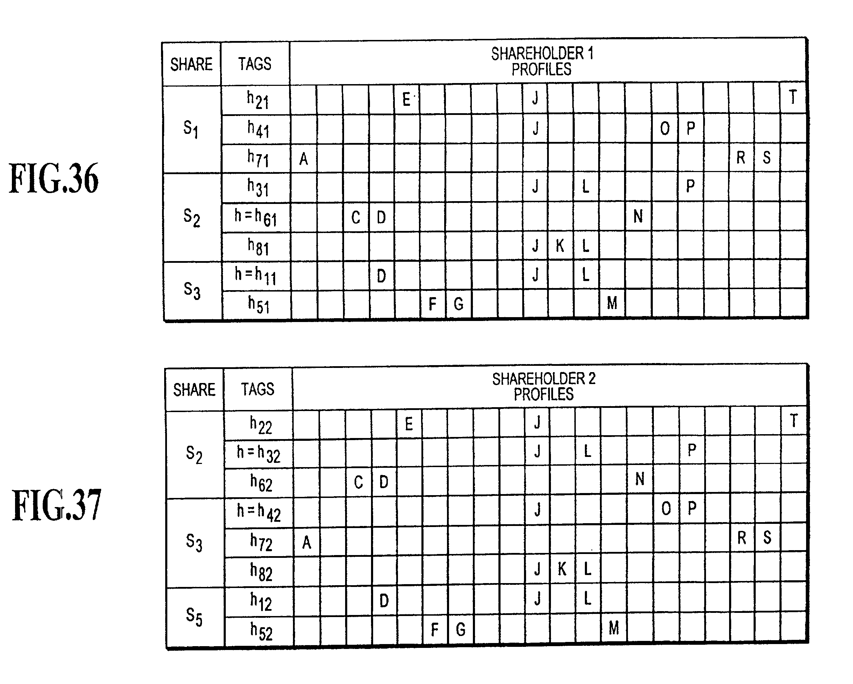

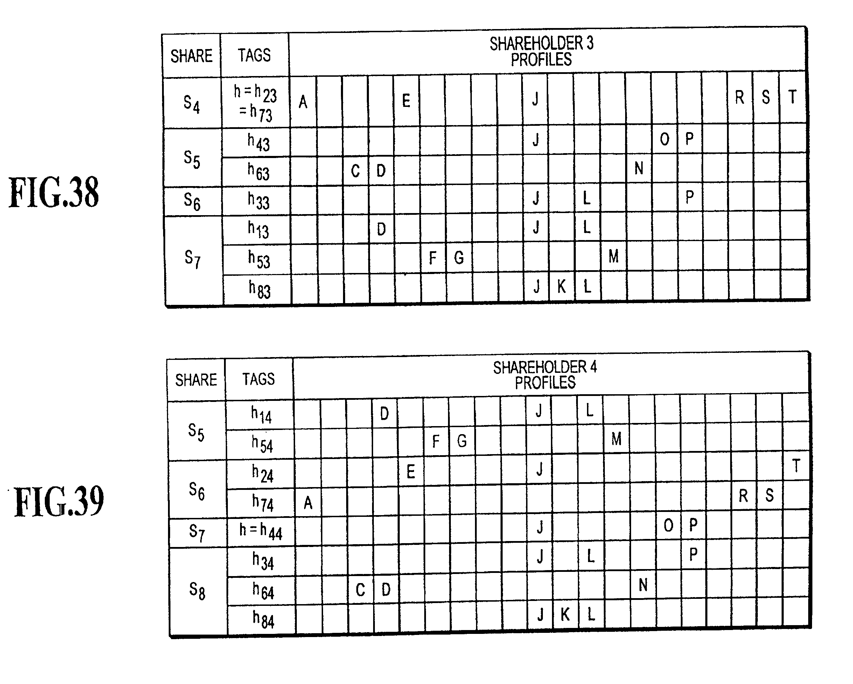

FIG. 35 illustrates an exemplary system identical in all respects to that previously illustrated in FIG. 4, with the addition of tag values, $h_{ij}$, for each secret share (all shares are tag-holding). Furthermore, it is assumed that the boldfaced and italicized tag values ($h_{11}$, $h_{61}$, $h_{32}$, $h_{42}$, $h_{23}$, $h_{73}$, $h_{44}$, $h_{35}$, $h_{45}$ and $h_{75}$) are all the identical value, h. FIGS. 36-40 illustrate the profiles maintained by each shareholder as a result. Note that, in profiles in which no secret share is combined with collided tag values (e.g., FIG. 36), privacy is reduced to the extent that adverse parties can now analyze both the secret share and its corresponding tag to obtain some information about the entity identification and its corresponding activities. This would particularly be the case where shareholders collude. For example, with regard to FIGS. 36 and 39, shareholder 1 and shareholder 4 could compare profiles and recognize that their respective share/tag combinations $S_1$:$h_{21}$ and $S_6$:$h_{24}$ have identical activity profiles. Now, rather than each having one piece of information (i.e., secret shares) from which to deduce the corresponding entity, each now has two pieces of information (i.e., the secret shares and the corresponding tags) from which to deduce the corresponding entity.

The occurrence of collisions, however, mitigates this loss of privacy. An example of this is illustrated in FIG. 38. As shown therein, shareholder 3 is in possession of secret share $S_3$ which has associated therewith a single tag, h (in fact corresponding to both Users 2 and 7). This implies that both User 2 and User 7 have the secret share $S_3$ a part of their respective plurality of secret shares and, more significantly, each has the same tag value corresponding to that secret share due to a collision in the hash function. As a result, the profile for this secret share/tag combination includes the activities of both User **2** and User 7. In this manner, it is more difficult to determine which activities are attributable to which user, thereby conferring a greater degree of privacy. Thus, greater frequency of such occurrences leads to greater protection of privacy. In general, however, this should result in an equivalent loss of recommendation accuracy to the extent that, for a given entity, "spurious" activities are more likely to be included in a resulting activities estimate.

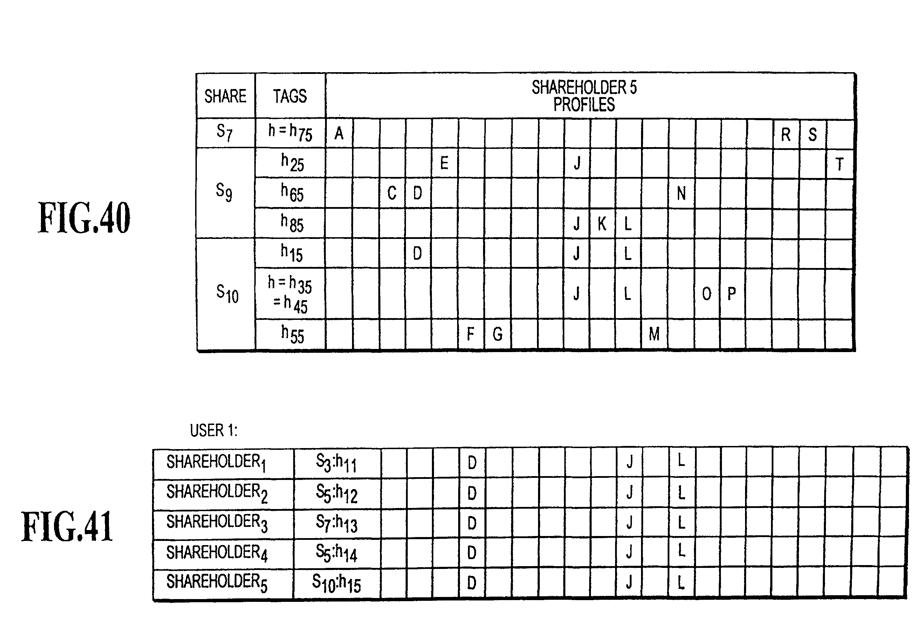

Returning again to FIG. 3, when it is desired to generate recommendations for a given entity, the activities associated with that entity's secret shares and tags for tag-holding shares are obtained at block 3408. The process of block 3408 requires that the entity identification be split, the shares classified into tag-holding and non-tag-holding, and the corresponding tags generated as was previously done at block 304 and block 3402, respectively. This information is used to index each shareholder and obtain a corresponding portion of each shareholder's profiles. Referring now to FIGS. 41-48, the corresponding activities for each user in the previous example are shown. Note that in almost all cases, the activities correlate exactly to the activities originally set forth in the example of FIG. 34. Again, this is due to the greater accuracy provided through the use of tags as described herein.

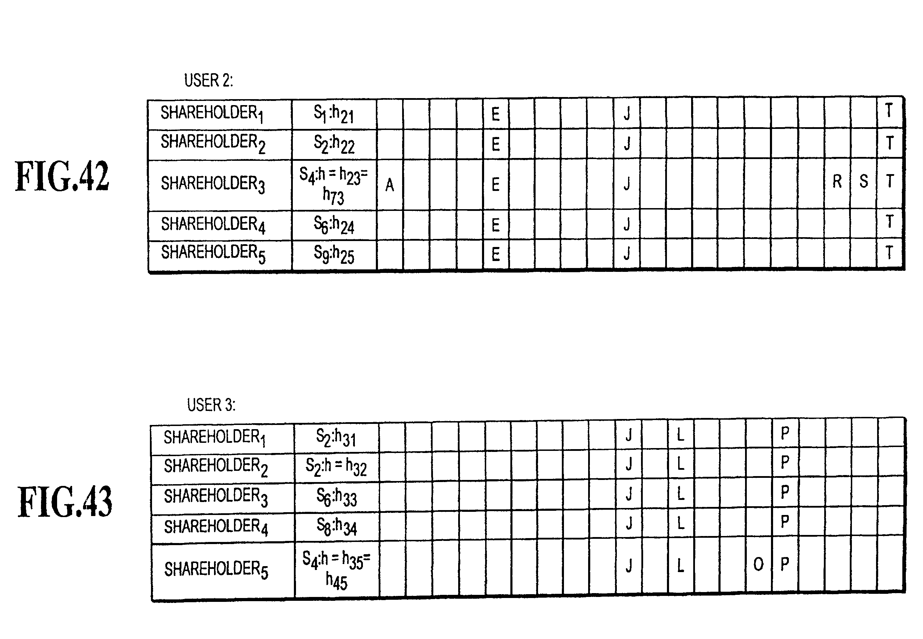

Thereafter, at block 3410, an estimated activities list is generated based on the activities obtained at block 3408. As the estimated activities lists shown in FIG. 49 indicate, the estimates are in fact completely accurate, despite the existence of some spurious activities included for each user (see, e.g., FIGS. 42, 44 and 47). This is because, in general, the activities associated with any separate secret share/tag combination are more likely to be accurate than not depending on the degree of collisions allowed by the hash function. Because the estimated activities lists are the result of calculating the intersection of the activities associated with each constituent secret share/tag combination, the occurrence of even one completely accurate secret share/tag combination will result in perfect estimation. Even if the activities associated with each secret share/tag combination do in fact include spurious activities, accuracy will still be maintained to the extent that the spurious activities occur randomly throughout.

With the estimated activities list in hand, recommendations can be generated and provided in the same manner as that described above relative to FIG. 3.

In the foregoing specification, the invention has been described with reference to specific embodiments. However, those of ordinary skill in the art will appreciate that various modifications and changes can be made without departing from the scope of the present invention as set forth in the claims below. Accordingly, the specification and figures are to be regarded in an illustrative rather than a restrictive sense, and all such modifications are intended to be included within the scope of present invention. For example, secure multi-party computing could be used in place of the anonymity service. That is, rather than a single third party managing anonymous transactions, a distributed model may be employed. As known in the art, secure multi-party computation involves computing a function of many variables where many parties each provide one or more variables. For example, secret shares of public keys may be used to encrypt and decrypt data without reconstructing the public key. As a result, a provider could send a set of recommendations to an entity in an encrypted form by letting the shareholders encrypt the recommendation using secure multi-party computation. Thus, in the context of the present invention, the shareholders themselves may implement functions described above as being implemented by the anonymity service (if the shareholders are known to each other) using known techniques.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential features or elements of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A computer-readable medium (212) having stored thereon a data structure comprising:

   information identifying a secret share of a finite set of secret shares, the secret share being a member of at least one set of secret shares, each set of secret shares collectively defining an entity identification associated with an entity (202); and
   at least one set of activities associated with the at least one tag, the at least one set of activities corresponding to at least one activity conducted within a commerce system by the at least one entity,

   wherein the information identifying a secret share of a finite set of secret shares is associated with information identifying the secret share as a tag-holding share or a non-tag-holding share,
   wherein at least one of the set of secret shares is a tag-holding share,
   wherein the tag-holding share has at least one tag associated with the information identifying the secret share, wherein the at least one tag is based at least in part upon information associated with a corresponding one of at least one entity (202) of a plurality of entities.

2. The computer-readable medium (212) of claim 1, wherein the at least one tag is provided (3402) by a non-invertible hash function based on the information associated with the at least one entity.

3. The computer-readable medium of claim 2, wherein the at least one tag is provided (3402) by the non-invertible hash function based on at least a portion of a set of secret shares corresponding to an entity of the at least one entity.

4. An apparatus (203) for use in a commerce system (200) that comprises a plurality of entities (202) each having an entity identity that is stored as a plurality of secret shares among at least a portion of a plurality of shareholders (207), the apparatus comprising:

   means for associating (210, 212, 3406), for each entity of the plurality of entities, the at least one activity conducted by the entity within the commerce system with each of the plurality of secret shares used to store the entity's identity;
   means for associating, (3406) for each entity of the plurality of entities (202), at least one tag with at least one activity for each tag-holding share, wherein the at least one tag is based at least in part upon information associated with the entity;
   means for generating (210, 212, 3410), for a first entity of the plurality of entities (202), an estimated activities list comprising common activities, each of the common activities being associated with each secret share of a plurality of secret shares used to store the first entity's identity and with at least one first tag if the share is tag-holding, wherein the at least one first tag is based at least in part upon information associated with the first entity.

5. The apparatus of claim 4, further comprising:

   means for generating (210, 212, 314) a set of recommendations based on the estimated activities list; and
   means, coupled to the means for generating (210, 212, 314) the set of recommendations, for providing (210, 212, 316) the set of recommendations to the first entity.

6. The apparatus of claim 5, wherein the means for generating further comprises:

   means for retrieving, by an anonymity service provider in communication with the first entity and each of the first portion of the plurality of shareholders, sets of activities from the first portion of the plurality of shareholders, wherein each set of activities of the sets of activities is associated with a corresponding secret share of the plurality of secret shares used to store the first entity's identity and, if the share is tag-holding, one of the at least one first tag; and means for calculating, by the anonymity service provider, an intersection of the sets of activities to provide the common activities.

7. A computer-readable medium (212) having stored thereon a data structure comprising:

an estimated activities list corresponding to an entity of a plurality of entities within a commerce system, the estimated activities list comprising common activities that are found within each of a plurality of profiles,

wherein the plurality of profiles corresponds to a plurality of secret shares that collectively define an entity identification of the entity, wherein each of the plurality of profiles comprises at least one activity subset, the activity subset being associated with a secret share of the plurality of secret shares, wherein the activity subsets associated with tag-holding shares are additionally associated with at least one tag, wherein a first tag of the at least one tag, based at least in part upon information associated with the entity, is associated with a first activity subset of the activity subsets associated with tag-holding shares, the first activity subset comprising activities conducted in the commerce system by at least the entity, and wherein the common activities comprise an intersection of activity subsets corresponding to each of the plurality of profiles and, if the shares are tag-holding, also associated with the first tag.

8. The computer-readable medium (212) of claim 7, wherein the first tag is provided by a non-invertible hash function based on the information associated with the entity.

9. The computer-readable medium (212) of claim 8, wherein the first tag is provided by the non-invertible hash function based on at least a portion of the plurality of secret shares.

*102* ENTITIES  *103* PUBLIC NETWORK  *104* PROVIDER

*106* CREDIT AGENCY

*100*

-PRIOR ART-

# FIG.1

*207* SHAREHOLDERS

*202* ENTITIES  *203* ANONYMITY SERVICE  *204* PROVIDER

*210* PROCESSOR

*212* MEMORY

*200*

# FIG.2

FIG.3

| USER | 1 | 2 | 3 | 4 | 5 | EVENTS | | |
|------|-----|-----|-----|-----|------|---|---|---|
| | SECRET SHARES VALUES | | | | | | | |
| 1 | $S_3$ | $S_5$ | $S_7$ | $S_5$ | $S_{10}$ | D | J | L |
| 2 | $S_1$ | $S_2$ | $S_4$ | $S_6$ | $S_9$ | E | J | T |
| 3 | $S_2$ | $S_2$ | $S_6$ | $S_8$ | $S_{10}$ | J | L | P |
| 4 | $S_1$ | $S_3$ | $S_5$ | $S_7$ | $S_{10}$ | J | O | P |
| 5 | $S_3$ | $S_5$ | $S_7$ | $S_5$ | $S_{10}$ | F | G | M |
| 6 | $S_2$ | $S_2$ | $S_5$ | $S_8$ | $S_9$ | C | D | N |
| 7 | $S_1$ | $S_3$ | $S_4$ | $S_6$ | $S_7$ | A | R | S |
| 8 | $S_2$ | $S_3$ | $S_7$ | $S_8$ | $S_9$ | J | K | L |

## FIG.4

| SHARE VALUE | SHAREHOLDER 1 PROFILES | | | | | | | | | | | | | | | | | | | |
|-------------|---|---|---|---|---|---|---|---|---|---|---|---|---|---|---|---|---|---|---|---|
| $S_1$ | A | | | | E | | | | | J | | | | | O | P | | R | S | T |
| $S_2$ | | | C | D | | | | | | J | K | L | | N | | P | | | | |
| $S_3$ | | | | D | | F | G | | | J | | L | M | | | | | | | |

## FIG.5

| SHARE VALUE | SHAREHOLDER 2 PROFILES | | | | | | | | | | | | | | | | | | | |
|-------------|---|---|---|---|---|---|---|---|---|---|---|---|---|---|---|---|---|---|---|---|
| $S_2$ | | | C | D | E | | | | | J | | L | | N | | P | | | | T |
| $S_3$ | A | | | | | | | | | J | K | L | | | O | P | | R | S | |
| $S_5$ | | | | D | | F | G | | | J | | L | M | | | | | | | |

## FIG.6

## FIG.7

| SHARE VALUE | SHAREHOLDER 3 PROFILES | | | | | | | | | | | | | | | | | | | |
|---|---|---|---|---|---|---|---|---|---|---|---|---|---|---|---|---|---|---|---|---|
| $S_4$ | A | | | | E | | | | | J | | | | | | | | | R | S | T |
| $S_5$ | | | C | D | | | | | | J | | | | N | O | P | | | | | |
| $S_6$ | | | | | | | | | | J | | L | | | | P | | | | | |
| $S_7$ | | | | D | | F | G | | | J | K | L | M | | | | | | | | |

**FIG.7**

## FIG.8

| SHARE VALUE | SHAREHOLDER 4 PROFILES | | | | | | | | | | | | | | | | | | | |
|---|---|---|---|---|---|---|---|---|---|---|---|---|---|---|---|---|---|---|---|---|
| $S_5$ | | | | D | | F | G | | | J | | L | M | | | | | | | | |
| $S_6$ | A | | | | E | | | | | J | | | | | | | | | R | S | T |
| $S_7$ | | | | | | | | | | J | | | | | O | P | | | | | |
| $S_8$ | | | C | D | | | | | | J | K | L | | N | | P | | | | | |

**FIG.8**

## FIG.9

| SHARE VALUE | SHAREHOLDER 5 PROFILES | | | | | | | | | | | | | | | | | | | |
|---|---|---|---|---|---|---|---|---|---|---|---|---|---|---|---|---|---|---|---|---|
| $S_7$ | A | | | | | | | | | | | | | | | | | | R | S | |
| $S_9$ | | | C | D | E | | | | | J | K | L | | N | | | | | | | T |
| $S_{10}$ | | | | D | | F | G | | | J | | L | M | | O | P | | | | | |

**FIG.9**

EP 1 288 831 A1

USER 1:

| | (S) | A | B | C | D | E | F | G | H | I | J | K | L | M | N | O | P | Q | R | S | T |
|---|---|---|---|---|---|---|---|---|---|---|---|---|---|---|---|---|---|---|---|---|---|
| SHAREHOLDER$_1$ | $S_3$ | | | | D | | F | G | | | J | | L | M | | | | | | | |
| SHAREHOLDER$_2$ | $S_5$ | | | | D | | F | G | | | J | | L | M | | | | | | | |
| SHAREHOLDER$_3$ | $S_7$ | | | | D | | F | G | | | J | K | L | M | | | | | | | |
| SHAREHOLDER$_4$ | $S_5$ | | | | D | | F | G | | | J | | L | M | | | | | | | |
| SHAREHOLDER$_5$ | $S_{10}$ | | | | D | | F | G | | | J | | L | M | | O | P | | | | |

# FIG.10

USER 2:

| | (S) | A | B | C | D | E | F | G | H | I | J | K | L | M | N | O | P | Q | R | S | T |
|---|---|---|---|---|---|---|---|---|---|---|---|---|---|---|---|---|---|---|---|---|---|
| SHAREHOLDER$_1$ | $S_1$ | A | | | | E | | | | | J | | | | | O | P | | R | S | T |
| SHAREHOLDER$_2$ | $S_2$ | | | C | D | E | | | | | J | | L | | N | | P | | | | T |
| SHAREHOLDER$_3$ | $S_4$ | A | | | | E | | | | | J | | | | | | | | R | S | T |
| SHAREHOLDER$_4$ | $S_6$ | A | | | | E | | | | | J | | | | | | | | R | S | T |
| SHAREHOLDER$_5$ | $S_9$ | | | C | D | E | | | | | J | K | L | | N | | | | | | T |

# FIG.11

USER 3:

| | | A | B | C | D | E | F | G | H | I | J | K | L | M | N | O | P | Q | R | S | T |
|---|---|---|---|---|---|---|---|---|---|---|---|---|---|---|---|---|---|---|---|---|---|
| SHAREHOLDER$_1$ | S$_2$ | | | C | D | | | | | | J | K | L | | N | | P | | | | |
| SHAREHOLDER$_2$ | S$_2$ | | | C | D | E | | | | | J | | L | | N | | P | | | | T |
| SHAREHOLDER$_3$ | S$_6$ | | | | | | | | | | J | | L | | | | P | | | | |
| SHAREHOLDER$_4$ | S$_8$ | | | C | D | | | | | | J | K | L | | N | | P | | | | |
| SHAREHOLDER$_5$ | S$_{10}$ | | | | D | | F | G | | | J | | L | M | | O | P | | | | |

## FIG.12

USER 4:

| | | A | B | C | D | E | F | G | H | I | J | K | L | M | N | O | P | Q | R | S | T |
|---|---|---|---|---|---|---|---|---|---|---|---|---|---|---|---|---|---|---|---|---|---|
| SHAREHOLDER$_1$ | S$_1$ | A | | | | E | | | | | J | | | | | O | P | | R | S | T |
| SHAREHOLDER$_2$ | S$_3$ | A | | | | | | | | | J | K | L | | | O | P | | R | S | |
| SHAREHOLDER$_3$ | S$_5$ | | | C | D | | | | | | J | | | | N | O | P | | | | |
| SHAREHOLDER$_4$ | S$_7$ | | | | | | | | | | J | | | | | O | P | | | | |
| SHAREHOLDER$_5$ | S$_{10}$ | | | | D | | F | G | | | J | | L | M | | O | P | | | | |

## FIG.13

EP 1 288 831 A1

USER 5:

| | | C | D | E | F | G | H | I | J | K | L | M | N | O | P | Q | R | S | T |
|---|---|---|---|---|---|---|---|---|---|---|---|---|---|---|---|---|---|---|---|
| SHAREHOLDER$_1$ | S$_3$ | | D | | F | G | | | J | | L | M | | | | | | | |
| SHAREHOLDER$_2$ | S$_5$ | | D | | F | G | | | J | | L | M | | | | | | | |
| SHAREHOLDER$_3$ | S$_7$ | | D | | F | G | | | J | K | L | M | | | | | | | |
| SHAREHOLDER$_4$ | S$_5$ | | D | | F | G | | | J | | L | M | | | | | | | |
| SHAREHOLDER$_5$ | S$_{10}$ | | D | | F | G | | | J | | L | M | | O | P | | | | |

## FIG.14

USER 6:

| | | C | D | E | F | G | H | I | J | K | L | M | N | O | P | Q | R | S | T |
|---|---|---|---|---|---|---|---|---|---|---|---|---|---|---|---|---|---|---|---|
| SHAREHOLDER$_1$ | S$_2$ | C | D | | | | | | J | K | L | | N | | P | | | | |
| SHAREHOLDER$_2$ | S$_2$ | C | D | E | | | | | J | | L | | N | | P | | | | T |
| SHAREHOLDER$_3$ | S$_5$ | C | D | | | | | | J | | | | N | O | P | | | | |
| SHAREHOLDER$_4$ | S$_8$ | C | D | | | | | | J | K | L | | N | | P | | | | |
| SHAREHOLDER$_5$ | S$_9$ | C | D | E | | | | | J | K | L | | N | | | | | | T |

## FIG.15

EP 1 288 831 A1

USER 7:

| | | A | B | C | D | E | F | G | H | I | J | K | L | M | N | O | P | Q | R | S | T |
|---|---|---|---|---|---|---|---|---|---|---|---|---|---|---|---|---|---|---|---|---|---|
| SHAREHOLDER$_1$ | S$_1$ | A | | | | E | | | | | J | | | | | O | P | | R | S | T |
| SHAREHOLDER$_2$ | S$_3$ | A | | | | | | | | | J | K | L | | | O | P | | R | S | |
| SHAREHOLDER$_3$ | S$_4$ | A | | | | E | | | | | J | | | | | | | | R | S | T |
| SHAREHOLDER$_4$ | S$_6$ | A | | | | E | | | | | J | | | | | | | | R | S | T |
| SHAREHOLDER$_5$ | S$_7$ | A | | | | | | | | | | | | | | | | | R | S | |

## FIG.16

USER 8:

| | | A | B | C | D | E | F | G | H | I | J | K | L | M | N | O | P | Q | R | S | T |
|---|---|---|---|---|---|---|---|---|---|---|---|---|---|---|---|---|---|---|---|---|---|
| SHAREHOLDER$_1$ | S$_2$ | | | C | D | | | | | | J | K | L | | N | | P | | | | |
| SHAREHOLDER$_2$ | S$_3$ | A | | | | | | | | | J | K | L | | | O | P | | R | S | |
| SHAREHOLDER$_3$ | S$_7$ | | | | D | | F | G | | | J | K | L | M | | | | | | | |
| SHAREHOLDER$_4$ | S$_8$ | | | C | D | | | | | | J | K | L | | N | | P | | | | |
| SHAREHOLDER$_5$ | S$_9$ | | | C | D | E | | | | | J | K | L | | N | | | | | | T |

## FIG.17

EP 1 288 831 A1

| USER | ESTIMATED ACTIVITIES | | | | | |
|---|---|---|---|---|---|---|
| 1 | D | *F* | *G* | J | L | *M* |
| 2 | E | J | T | | | |
| 3 | J | L | P | | | |
| 4 | J | O | P | | | |
| 5 | *D* | F | G | *J* | *L* | M |
| 6 | C | D | *J* | N | | |
| 7 | A | R | S | | | |
| 8 | J | K | L | | | |

**FIG.18**

| USER | 1 | 2 | 3 | 4 | 5 | EVENTS | | |
|---|---|---|---|---|---|---|---|---|
| | SECRET SHARES VALUES | | | | | | | |
| 1 | $S_3$ | $S_5$ | $S_7$ | $S_5$ | $S_{10}$ | D | K | L |
| 2 | $S_1$ | $S_2$ | $S_4$ | $S_6$ | $S_9$ | E | J | T |
| 3 | $S_2$ | $S_2$ | $S_6$ | $S_8$ | $S_{10}$ | J | L | P |
| 4 | $S_1$ | $S_3$ | $S_5$ | $S_7$ | $S_{10}$ | F | O | P |
| 5 | $S_3$ | $S_5$ | $S_7$ | $S_5$ | $S_{10}$ | F | G | M |
| 6 | $S_2$ | $S_2$ | $S_5$ | $S_8$ | $S_9$ | C | D | N |
| 7 | $S_1$ | $S_3$ | $S_4$ | $S_6$ | $S_7$ | A | R | S |
| 8 | $S_2$ | $S_3$ | $S_7$ | $S_8$ | $S_9$ | J | K | L |

**FIG.19**

**FIG.20** — SHAREHOLDER 1 PROFILES

| SHARE VALUE | A | B | C | D | E | F | G | H | I | J | K | L | M | N | O | P | Q | R | S | T |
|---|---|---|---|---|---|---|---|---|---|---|---|---|---|---|---|---|---|---|---|---|
| $S_1$ | A |  |  |  | E | F |  |  |  | J |  |  |  |  | O | P |  | R | S | T |
| $S_2$ |  |  | C | D |  |  |  |  |  | J | K | L |  | N |  | P |  |  |  |  |
| $S_3$ |  |  |  | D |  | F | G |  |  |  | K | L | M |  |  |  |  |  |  |  |

**FIG.20**

**FIG.21** — SHAREHOLDER 2 PROFILES

| SHARE VALUE | A | B | C | D | E | F | G | H | I | J | K | L | M | N | O | P | Q | R | S | T |
|---|---|---|---|---|---|---|---|---|---|---|---|---|---|---|---|---|---|---|---|---|
| $S_2$ |  |  | C | D | E |  |  |  |  | J |  | L |  | N |  | P |  |  |  | T |
| $S_3$ | A |  |  |  |  | F |  |  |  | J | K | L |  |  | O | P |  | R | S |  |
| $S_5$ |  |  |  | D |  | F | G |  |  |  | K | L | M |  |  |  |  |  |  |  |

**FIG.21**

**FIG.22** — SHAREHOLDER 3 PROFILES

| SHARE VALUE | A | B | C | D | E | F | G | H | I | J | K | L | M | N | O | P | Q | R | S | T |
|---|---|---|---|---|---|---|---|---|---|---|---|---|---|---|---|---|---|---|---|---|
| $S_4$ | A |  |  |  | E |  |  |  |  | J |  |  |  |  |  |  |  | R | S | T |
| $S_5$ |  |  | C | D |  | F |  |  |  |  |  |  |  | N | O | P |  |  |  |  |
| $S_6$ |  |  |  |  |  |  |  |  |  | J |  | L |  |  |  | P |  |  |  |  |
| $S_7$ |  |  |  | D |  | F | G |  |  | J | K | L | M |  |  |  |  |  |  |  |

**FIG.22**

**FIG.23**

| SHARE VALUE | SHAREHOLDER 4 PROFILES | | | | | | | | | | | | | | | | | | | |
|---|---|---|---|---|---|---|---|---|---|---|---|---|---|---|---|---|---|---|---|---|
| $S_5$ | | | | D | | F | G | | | | K | L | M | | | | | | | |
| $S_6$ | A | | | | E | | | | | J | | | | | | | | | R | S | T |
| $S_7$ | | | | | | F | | | | | | | | | | O | P | | | | |
| $S_8$ | | | C | D | | | | | | J | K | L | | N | | | P | | | | |

FIG.23

**FIG.24**

| SHARE VALUE | SHAREHOLDER 5 PROFILES | | | | | | | | | | | | | | | | | | | |
|---|---|---|---|---|---|---|---|---|---|---|---|---|---|---|---|---|---|---|---|---|
| $S_7$ | A | | | | | | | | | | | | | | | | | R | S | |
| $S_9$ | | | C | D | E | | | | | J | K | L | | N | | | | | | T |
| $S_{10}$ | | | | D | | F | G | | | J | K | L | M | | O | P | | | | |

FIG.24

**USER 1:**

| | | | | | | | | | | | | | | |
|---|---|---|---|---|---|---|---|---|---|---|---|---|---|---|
| SHAREHOLDER1 | S3 | | | D | F | G | | | K | L | M | | | |
| SHAREHOLDER2 | S5 | | | D | F | G | | | K | L | M | | | |
| SHAREHOLDER3 | S7 | | | D | F | G | | J | K | L | M | | | |
| SHAREHOLDER4 | S5 | | | D | F | G | | | K | L | M | | | |
| SHAREHOLDER5 | S10 | | | D | F | G | | J | K | L | M | O | P | |

**FIG.25**

**USER 2:**

| | | | | | | | | | | | | | | | | |
|---|---|---|---|---|---|---|---|---|---|---|---|---|---|---|---|---|
| SHAREHOLDER1 | S1 | A | | | E | F | | J | | | | | O | P | R | S | T |
| SHAREHOLDER2 | S2 | | C | D | E | | | J | | L | | N | | P | | | T |
| SHAREHOLDER3 | S4 | A | | | E | | | J | | | | | | | R | S | T |
| SHAREHOLDER4 | S6 | A | | | E | | | J | | | | | | | R | S | T |
| SHAREHOLDER5 | S9 | | C | D | E | | | J | K | L | | N | | | | | T |

**FIG.26**

USER 3:

| SHAREHOLDER₁ | $S_2$ | | | C | D | | | | | | J | K | L | | N | | P | | | | |
|---|---|---|---|---|---|---|---|---|---|---|---|---|---|---|---|---|---|---|---|---|---|
| SHAREHOLDER₂ | $S_2$ | | | C | D | E | | | | | J | | L | | N | | P | | | | T |
| SHAREHOLDER₃ | $S_6$ | | | | | | | | | | J | | L | | | | P | | | | |
| SHAREHOLDER₄ | $S_8$ | | | C | D | | | | | | J | K | L | | N | | P | | | | |
| SHAREHOLDER₅ | $S_{10}$ | | | | D | | F | G | | | J | K | L | M | | O | P | | | | |

## FIG.27

USER 4:

| SHAREHOLDER₁ | $S_1$ | A | | | | E | F | | | | J | | | | | O | P | | R | S | T |
|---|---|---|---|---|---|---|---|---|---|---|---|---|---|---|---|---|---|---|---|---|---|
| SHAREHOLDER₂ | $S_3$ | A | | | | | F | | | | J | K | L | | | O | P | | R | S | |
| SHAREHOLDER₃ | $S_5$ | | | C | D | | F | | | | | | | | N | O | P | | | | |
| SHAREHOLDER₄ | $S_7$ | | | | | | F | | | | | | | | | O | P | | | | |
| SHAREHOLDER₅ | $S_{10}$ | | | | D | | F | G | | | J | K | L | M | | O | P | | | | |

## FIG.28

EP 1 288 831 A1

USER 5:

| | | D | F | G | J | K | L | M | O | P |
|---|---|---|---|---|---|---|---|---|---|---|
| SHAREHOLDER$_1$ | $S_3$ | D | F | G | | K | L | M | | |
| SHAREHOLDER$_2$ | $S_5$ | D | F | G | | K | L | M | | |
| SHAREHOLDER$_3$ | $S_7$ | D | F | G | J | K | L | M | | |
| SHAREHOLDER$_4$ | $S_5$ | D | F | G | | K | L | M | | |
| SHAREHOLDER$_5$ | $S_{10}$ | D | F | G | J | K | L | M | O | P |

# FIG.29

USER 6:

| | | C | D | E | F | J | K | L | M | N | O | P | T |
|---|---|---|---|---|---|---|---|---|---|---|---|---|---|
| SHAREHOLDER$_1$ | $S_2$ | C | D | | | J | K | L | | N | | P | |
| SHAREHOLDER$_2$ | $S_2$ | C | D | E | | J | | L | | N | | P | T |
| SHAREHOLDER$_3$ | $S_5$ | C | D | | F | | | | | N | O | P | |
| SHAREHOLDER$_4$ | $S_8$ | C | D | | | J | K | L | | N | | P | |
| SHAREHOLDER$_5$ | $S_9$ | C | D | E | | J | K | L | M | N | | | T |

# FIG.30

EP 1 288 831 A1

USER 7:

| | | A | B | C | D | E | F | G | H | I | J | K | L | M | N | O | P | Q | R | S | T |
|---|---|---|---|---|---|---|---|---|---|---|---|---|---|---|---|---|---|---|---|---|---|
| SHAREHOLDER$_1$ | S$_1$ | A | | | | E | F | | | | J | | | | | O | P | | R | S | T |
| SHAREHOLDER$_2$ | S$_3$ | A | | | | | F | | | | J | K | L | | | O | P | | R | S | |
| SHAREHOLDER$_3$ | S$_4$ | A | | | | E | | | | | J | | | | | | | | R | S | T |
| SHAREHOLDER$_4$ | S$_6$ | A | | | | E | | | | | J | | | | | | | | R | S | T |
| SHAREHOLDER$_5$ | S$_7$ | A | | | | | | | | | | | | | | | | | R | S | |

## FIG.31

USER 8:

| | | A | B | C | D | E | F | G | H | I | J | K | L | M | N | O | P | Q | R | S | T |
|---|---|---|---|---|---|---|---|---|---|---|---|---|---|---|---|---|---|---|---|---|---|
| SHAREHOLDER$_1$ | S$_2$ | | | C | D | | | | | | J | K | L | | N | | P | | | | |
| SHAREHOLDER$_2$ | S$_3$ | A | | | | | F | | | | J | K | L | | | O | P | | R | S | |
| SHAREHOLDER$_3$ | S$_7$ | | | | D | | F | G | | | J | K | L | M | | | | | | | |
| SHAREHOLDER$_4$ | S$_8$ | | | C | D | | | | | | J | K | L | | N | | P | | | | |
| SHAREHOLDER$_5$ | S$_9$ | | | C | D | E | | | | | J | K | L | | N | | | | | | T |

## FIG.32

| USER | ESTIMATED ACTIVITIES | | | | | |
|:---:|:---:|:---:|:---:|:---:|:---:|:---:|
| 1 | D | *F* | *G* | K | L | *M* |
| 2 | E | J | T | | | |
| 3 | J | L | P | | | |
| 4 | F | O | P | | | |
| 5 | *D* | F | G | *K* | *L* | M |
| 6 | C | D | N | | | |
| 7 | A | R | S | | | |
| 8 | J | K | L | | | |

# FIG.33

START

302 — ENTITY ID AND ACTIVITY ?

NO

YES

304 — SPLIT ENTITY ID

3402 — GENERATE TAGS

3404 — SEND SECRET SHARES, TAGS AND INFORMATION REGARDING ACTIVITY TO SHAREHOLDERS

3406 — EACH SHAREHOLDER ASSOCIATES ACTIVITY WITH CORRESPONDING SECRET SHARE AND TAG

3408 — OBTAIN ACTIVITIES ASSOCIATED WITH EACH SECRET SHARE AND TAG CORRESPONDING TO ENTITY

3410 — GENERATE ESTIMATED ACTIVITIES LIST

314 — GENERATE RECOMMENDATIONS

316 — PROVIDE RECOMMENDATIONS

FIG.34

29

| USER | SECRET SHARES & TAGS | | | | | EVENTS | | |
|---|---|---|---|---|---|---|---|---|
| | 1 | 2 | 3 | 4 | 5 | | | |
| 1 | $S_3{:}h_{11}$ | $S_5{:}h_{12}$ | $S_7{:}h_{13}$ | $S_5{:}h_{14}$ | $S_{10}{:}h_{15}$ | D | J | L |
| 2 | $S_1{:}h_{21}$ | $S_2{:}h_{22}$ | $S_4{:}h_{23}$ | $S_6{:}h_{24}$ | $S_9{:}h_{25}$ | E | J | T |
| 3 | $S_2{:}h_{31}$ | $S_2{:}h_{32}$ | $S_6{:}h_{33}$ | $S_8{:}h_{34}$ | $S_{10}{:}h_{35}$ | J | L | P |
| 4 | $S_1{:}h_{41}$ | $S_3{:}h_{42}$ | $S_5{:}h_{43}$ | $S_7{:}h_{44}$ | $S_{10}{:}h_{45}$ | J | O | P |
| 5 | $S_3{:}h_{51}$ | $S_5{:}h_{52}$ | $S_7{:}h_{53}$ | $S_5{:}h_{54}$ | $S_{10}{:}h_{55}$ | F | G | M |
| 6 | $S_2{:}h_{61}$ | $S_2{:}h_{62}$ | $S_5{:}h_{63}$ | $S_8{:}h_{64}$ | $S_9{:}h_{65}$ | C | D | N |
| 7 | $S_1{:}h_{71}$ | $S_3{:}h_{72}$ | $S_4{:}h_{73}$ | $S_6{:}h_{74}$ | $S_7{:}h_{75}$ | A | R | S |
| 8 | $S_2{:}h_{81}$ | $S_3{:}h_{82}$ | $S_7{:}h_{83}$ | $S_8{:}h_{84}$ | $S_9{:}h_{85}$ | J | K | L |

# FIG.35

| USER | ESTIMATED ACTIVITIES | | |
|---|---|---|---|
| 1 | D | J | L |
| 2 | E | J | T |
| 3 | J | L | P |
| 4 | J | O | P |
| 5 | F | G | M |
| 6 | C | D | N |
| 7 | A | R | S |
| 8 | J | K | L |

# FIG.49

# FIG.36

| SHARE | TAGS | SHAREHOLDER 1 PROFILES | | | | | | | | | | | | | | | | | | | |
|---|---|---|---|---|---|---|---|---|---|---|---|---|---|---|---|---|---|---|---|---|---|
| S₁ | $h_{21}$ | | | | E | | | | | J | | | | | | | | | | | T |
| | $h_{41}$ | | | | | | | | | J | | | | | | O | P | | | | |
| | $h_{71}$ | A | | | | | | | | | | | | | | | | | R | S | |
| S₂ | $h_{31}$ | | | | | | | | | J | | L | | | | | P | | | | |
| | $h = h_{61}$ | | C | D | | | | | | | | | N | | | | | | | | |
| | $h_{81}$ | | | | | | | | | J | K | L | | | | | | | | | |
| S₃ | $h = h_{11}$ | | | D | | | | | | J | | L | | | | | | | | | |
| | $h_{51}$ | | | | | F | G | | | | | | | M | | | | | | | |

# FIG.37

| SHARE | TAGS | SHAREHOLDER 2 PROFILES | | | | | | | | | | | | | | | | | | | |
|---|---|---|---|---|---|---|---|---|---|---|---|---|---|---|---|---|---|---|---|---|---|
| S₂ | $h_{22}$ | | | | E | | | | | J | | | | | | | | | | | T |
| | $h = h_{32}$ | | | | | | | | | J | | L | | | | | P | | | | |
| | $h_{62}$ | | C | D | | | | | | | | | N | | | | | | | | |
| S₃ | $h = h_{42}$ | | | | | | | | | J | | | | | | O | P | | | | |
| | $h_{72}$ | A | | | | | | | | | | | | | | | | | R | S | |
| | $h_{82}$ | | | | | | | | | J | K | L | | | | | | | | | |
| S₅ | $h_{12}$ | | | D | | | | | | J | | L | | | | | | | | | |
| | $h_{52}$ | | | | | F | G | | | | | | | M | | | | | | | |

EP 1 288 831 A1

**FIG.38**

| SHARE | TAGS | SHAREHOLDER 3 PROFILES |
|---|---|---|
| $S_4$ | $h = h_{23} = h_{73}$ | A E J R S T |
| $S_5$ | $h_{43}$ | J O P |
| | $h_{63}$ | C D N |
| $S_6$ | $h_{33}$ | J L P |
| $S_7$ | $h_{13}$ | D J L |
| | $h_{53}$ | F G M |
| | $h_{83}$ | J K L |

**FIG.39**

| SHARE | TAGS | SHAREHOLDER 4 PROFILES |
|---|---|---|
| $S_5$ | $h_{14}$ | D J L |
| | $h_{54}$ | F G M |
| $S_6$ | $h_{24}$ | E J T |
| | $h_{74}$ | A R S |
| $S_7$ | $h = h_{44}$ | J O P |
| $S_8$ | $h_{34}$ | J L P |
| | $h_{64}$ | C D N |
| | $h_{84}$ | J K L |

EP 1 288 831 A1

# FIG.40

| SHARE | TAGS | SHAREHOLDER 5 PROFILES | | | | | | | | | | | | | | | | | | | |
|---|---|---|---|---|---|---|---|---|---|---|---|---|---|---|---|---|---|---|---|---|---|
| $S_7$ | $h = h_{75}$ | A | | | | | | | | | | | | | | | | | R | S | |
| $S_9$ | $h_{25}$ | | | | | E | | | | J | | | | | | | | | | | T |
| | $h_{65}$ | | | C | D | | | | | | | | | N | | | | | | | |
| | $h_{85}$ | | | | | | | | | J | K | L | | | | | | | | | |
| $S_{10}$ | $h_{15}$ | | | | D | | | | | J | | L | | | | | | | | | |
| | $h = h_{35} = h_{45}$ | | | | | | | | | J | | L | | | O | P | | | | | |
| | $h_{55}$ | | | | | F | G | | | | | | M | | | | | | | | |

USER 1:

# FIG.41

| SHAREHOLDER$_1$ | $S_3:h_{11}$ | | | D | | | | | | J | | L | | | | | | | | | |
|---|---|---|---|---|---|---|---|---|---|---|---|---|---|---|---|---|---|---|---|---|---|
| SHAREHOLDER$_2$ | $S_5:h_{12}$ | | | D | | | | | | J | | L | | | | | | | | | |
| SHAREHOLDER$_3$ | $S_7:h_{13}$ | | | D | | | | | | J | | L | | | | | | | | | |
| SHAREHOLDER$_4$ | $S_5:h_{14}$ | | | D | | | | | | J | | L | | | | | | | | | |
| SHAREHOLDER$_5$ | $S_{10}:h_{15}$ | | | D | | | | | | J | | L | | | | | | | | | |

FIG.42

USER 2:

| Shareholder | Value | Letters |
|---|---|---|
| SHAREHOLDER$_1$ | $S_1{:}h_{21}$ | E ... J ... T |
| SHAREHOLDER$_2$ | $S_2{:}h_{22}$ | E ... J ... T |
| SHAREHOLDER$_3$ | $S_4{:}h = h_{23} = h_{73}$ | A ... E ... J ... R S T |
| SHAREHOLDER$_4$ | $S_6{:}h_{24}$ | E ... J ... T |
| SHAREHOLDER$_5$ | $S_9{:}h_{25}$ | E ... J ... T |

FIG.43

USER 3:

| Shareholder | Value | Letters |
|---|---|---|
| SHAREHOLDER$_1$ | $S_2{:}h_{31}$ | J ... L ... P |
| SHAREHOLDER$_2$ | $S_2{:}h = h_{32}$ | J ... L ... P |
| SHAREHOLDER$_3$ | $S_6{:}h_{33}$ | J ... L ... P |
| SHAREHOLDER$_4$ | $S_8{:}h_{34}$ | J ... L ... P |
| SHAREHOLDER$_5$ | $S_4{:}h = h_{35} = h_{45}$ | J ... L ... O P |

EP 1 288 831 A1

EP 1 288 831 A1

USER 4:

| SHAREHOLDER$_1$ | $S_1$:$h_{41}$ | | | | | | | | J | | | | O | P | | | | |
| SHAREHOLDER$_2$ | $S_3$:$h = h_{42}$ | | | | | | | | J | | | | O | P | | | | |
| SHAREHOLDER$_3$ | $S_5$:$h_{43}$ | | | | | | | | J | | | | O | P | | | | |
| SHAREHOLDER$_4$ | $S_7$:$h = h_{44}$ | | | | | | | | J | | | | O | P | | | | |
| SHAREHOLDER$_5$ | $S_{10}$:$h = h_{35} = h_{45}$ | | | | | | | | J | L | | | O | P | | | | |

**FIG.44**

USER 5:

| SHAREHOLDER$_1$ | $S_3$:$h_{51}$ | | | | F | G | | | | | M | | | | | | |
| SHAREHOLDER$_2$ | $S_5$:$h_{52}$ | | | | F | G | | | | | M | | | | | | |
| SHAREHOLDER$_3$ | $S_7$:$h_{53}$ | | | | F | G | | | | | M | | | | | | |
| SHAREHOLDER$_4$ | $S_5$:$h_{54}$ | | | | F | G | | | | | M | | | | | | |
| SHAREHOLDER$_5$ | $S_{10}$:$h_{55}$ | | | | F | G | | | | | M | | | | | | |

**FIG.45**

USER 6:

| SHAREHOLDER$_1$ | $S_2$:$h = h_{61}$ | | C | D | | | | | | | | | N | | | | |
| SHAREHOLDER$_2$ | $S_2$:$h_{62}$ | | C | D | | | | | | | | | N | | | | |
| SHAREHOLDER$_3$ | $S_5$:$h_{63}$ | | C | D | | | | | | | | | N | | | | |
| SHAREHOLDER$_4$ | $S_8$:$h_{64}$ | | C | D | | | | | | | | | N | | | | |
| SHAREHOLDER$_5$ | $S_9$:$h_{65}$ | | C | D | | | | | | | | | N | | | | |

**FIG.46**

**FIG.47**

USER 7:

| | | A | | | | | | | | | | | | | | | | | | | | R | S | |
|---|---|---|---|---|---|---|---|---|---|---|---|---|---|---|---|---|---|---|---|---|---|---|---|---|
| SHAREHOLDER$_1$ | $S_1$:$h_{71}$ | A | | | | | | | | | | | | | | | | | | | | R | S | |
| SHAREHOLDER$_2$ | $S_3$:$h = h_{72}$ | A | | | | | | | | | | | | | | | | | | | | R | S | |
| SHAREHOLDER$_3$ | $S_4$:$h = h_{23} = h_{73}$ | A | | | | E | | | | | J | | | | | | | | | | | R | S | T |
| SHAREHOLDER$_4$ | $S_6$:$h_{74}$ | A | | | | | | | | | | | | | | | | | | | | R | S | |
| SHAREHOLDER$_5$ | $S_7$:$h = h_{75}$ | A | | | | | | | | | | | | | | | | | | | | R | S | |

**FIG.48**

USER 8:

| | | | | | | | | | | J | K | L | | | | | | | | |
|---|---|---|---|---|---|---|---|---|---|---|---|---|---|---|---|---|---|---|---|---|
| SHAREHOLDER$_1$ | $S_2$:$h_{81}$ | | | | | | | | | J | K | L | | | | | | | | |
| SHAREHOLDER$_2$ | $S_3$:$h_{82}$ | | | | | | | | | J | K | L | | | | | | | | |
| SHAREHOLDER$_3$ | $S_7$:$h_{83}$ | | | | | | | | | J | K | L | | | | | | | | |
| SHAREHOLDER$_4$ | $S_8$:$h_{84}$ | | | | | | | | | J | K | L | | | | | | | | |
| SHAREHOLDER$_5$ | $S_9$:$h_{85}$ | | | | | | | | | J | K | L | | | | | | | | |

EP 1 288 831 A1

**European Patent Office**

## DECLARATION

Application Number

which under Rule 45 of the European Patent Convention EP 02 25 5802
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims<br><br>Reason: | CLASSIFICATION OF THE APPLICATION (Int.Cl.7)<br><br>G06F17/60 |
|---|---|
| The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.<br><br>The applicant's attention is drawn to the fact that a search may be carried out during examination following a declaration of no search under Rule 45 EPC, should the problems which led to the declaration being issued be overcome (see EPC Guideline C-VI, 8.5). | |

| Place of search | Date | Examiner |
|---|---|---|
| THE HAGUE | 28 October 2002 | Dubois, G |

EPO FORM 1504 (P04C37)